(19) Europäisches Patentamt
European Patent Office
Office européen des brevets

(11) **EP 2 746 344 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**17.07.2024 Patentblatt 2024/29**

(45) Hinweis auf die Patenterteilung:
**24.02.2021 Patentblatt 2021/08**

(21) Anmeldenummer: 13196210.2

(22) Anmeldetag: **09.12.2013**

(51) Internationale Patentklassifikation (IPC):
**C08L 77/06** (2006.01)        C08K 3/30 (2006.01)
C08K 3/22 (2006.01)

(52) Gemeinsame Patentklassifikation (CPC):
(C-Sets verfügbar)
**C08L 77/06; C08K 3/30;** C08K 3/22;
C08K 2003/2241; C08K 2003/3036; C08L 2205/02

(Forts.)

(54) **Verwendung einer Polyamidformmasse zur Herstellung eines schmutzabweisenden Artikels**

Use of a polyamide moulding composition for the preparation of a stain-resistant article

Utilisation d'une masse de moulage à base de polyamide pour la réalisation d'un article résistant aux taches

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12198915**

(43) Veröffentlichungstag der Anmeldung:
**25.06.2014 Patentblatt 2014/26**

(73) Patentinhaber: **EMS-CHEMIE AG**
**7013 Domat/Ems (CH)**

(72) Erfinder:
• **AEPLI, Etienne**
**7013 Domat/Ems (CH)**
• **PFLEGHAR, Mark**
**7013 Domat/Ems (CH)**
• **HOFFMANN, Botho**
**7013 Domat/Ems (CH)**
• **HOFF, Heinz**
**7015 Tamins (CH)**

(74) Vertreter: **Bremi, Tobias Hans**
**Isler & Pedrazzini AG**
**Giesshübelstrasse 45**
**Postfach 1772**
**8027 Zürich (CH)**

(56) Entgegenhaltungen:
EP-A1- 0 725 101      EP-A1- 0 837 087
EP-A1- 1 570 983      EP-A1- 1 882 719
EP-A1- 2 608 276      EP-A1- 2 703 436
EP-A1- 2 727 951      EP-A1- 2 778 190
WO-A1-2012/049255     WO-A1-2012/049255
WO-A2-2009/132989     WO-A2-2012/049252

GB-A- 1 091 007       US-A- 3 838 111
US-A- 5 416 172       US-A1- 2008 021 143
US-A1- 2010 140 846   US-A1- 2012 165 448

• ANONYMOUS: "TROGAMID CX Transparent polyamides with an outstanding combination of properties", 12 March 2009 (2009-03-12), XP055380134, Retrieved from the Internet <URL:http://doc.diytrade.com/docdvr/450410/43218039/1427598239.pdf> [retrieved on 20170609]
• FRANK R. PRINCE, ELI M. PEARCE: "The Effect of Isomer Ratio on the Properties of Bis(4-aminocyclohexyl)methane Polyamides", MACROMOLECULES, AMERICAN CHEMICAL SOCIETY, US, vol. 4, no. 3, 1 May 1971 (1971-05-01), US, pages 347 - 350, ISSN: 0024-9297, DOI: 10.1021/ma60021a020
• ANONYMOUS: "Zinc oxide", WIKIPEDIA, 25 November 2012 (2012-11-25), pages 1 - 19, Retrieved from the Internet <URL:https://en.wikipedia.org/w/index.php?title=Zinc_oxide&direction=next&oldid=524727905> [retrieved on 20240130]
• PubChem [Internet], Bethesda (MD) National Library of Medicine (US),National Center for Biotechnology Information, 2004-. PubChem Compound Summary for CID 24414, Barium Sulfate; Uses [archived on 2022 Dec 8 from :https://pubchem.ncbi.nlm.nih gov/compound/Barium-Sulfate)

EP 2 746 344 B2

(52)  Gemeinsame Patentklassifikation (CPC): (Forts.)

C-Sets
**C08L 77/06, C08K 2003/2241, C08L 77/06;**
**C08L 77/06, C08K 2003/3036, C08L 77/06;**
**C08L 77/06, C08L 77/06**

**Beschreibung**

TECHNISCHES GEBIET

Die vorliegende Erfindung betrifft die Verwendung von Formmassen für Artikel, insbesondere Gehäuse oder Gehäuseteile für elektronisch tragbare Geräte, die eine geringe Anfärbeneigung besitzen.

STAND DER TECHNIK

Insbesondere im Zusammenhang mit der Herstellung von Gehäusen für beispielsweise Mobiltelefone, tragbare Computer, etc., stellt sich das Problem, dass gewisse üblicherweise dafür verwendete Materialien, wenn sie mit Stoffen, die beim bestimmungsgemäßen Gebrauch ohne weiteres in Kontakt mit solchen Gehäusen kommen können, in einer Weise verschmutzt respektive eingefärbt werden, dass diese Einfärbung nachhaltig nicht mehr entfernt werden kann. Dies ist ein gravierender Nachteil, der im Zusammenhang mit Polyamid grundsätzlich bereits aus völlig anderen Anwendungen bekannt ist, so beispielsweise aus der Herstellung von Teppichen oder ähnlichem. In diesem Zusammenhang wurde entsprechend bereits vorgeschlagen, auf das als Grundmaterial verwendete Polyamid eine Beschichtung aufzutragen, die diese Anfälligkeit für Schmutzaufnahme reduziert. Solche zusätzlichen Beschichtungen oder Tauchbäder sind aber keine nachhaltige Lösung, da sie üblicherweise nicht für längere Zeit auf der Oberfläche verbleiben, wenn die Oberfläche mechanisch belastet wird oder mit Wasser, Schweiss und/oder Lösungsmitteln in Kontakt kommt.

Die US2004/046279 beschreibt die Herstellung von Polyamid-basierten Fasern mit hoher Schmutzresistenz, wobei als Basis u.a. auch ein semi-aromatisches Polyamid eingesetzt werden kann. Das Polyamid wird dabei zur Erhöhung der Resistenz bei der Herstellung mit einem speziellen Reagens, namentlich einem Terpolymer, ggf. in Kombination mit einem teilkristallinen thermoplastischen Polyester oder einem teilkristallinen thermoplastischen Polyamid, umgesetzt.

Die WO2012/049252A2 beschreibt anfärberesistente Artikel auf Basis von semi-aromatischen, teilkristallinen und hochschmelzenden, nicht transparenten Polyamidformmassen, die Terephthalsäure und ein aliphatisches Diamin mit mindestens 8 C-Atomen enthalten, so z.B. Systeme des Typs 9T oder 10T. Daneben enthalten diese Formmassen zwingend einen Verstärkungsstoff sowie ein Weisspigment. Die Artikel sollen einen Weissgrad (L*, Luminanz) von mindestens 70 im CIE Lichtraum gemessen nach ASTM E308-08 aufweisen. U.a. wird gezeigt, dass die weisspigmentierten und glasfaserverstärkten semi-aromatischen Polyamidfrommassen auf Basis von 9T und 10T die Farbe des als Test verwendeten Wangenrouges weniger stark annehmen als die Polyamide PA 66, PA 1010 oder PA 6T/66.

In der WO2012/049255A1 werden ebenfalls Artikel, insbesondere Gehäuse für tragbare elektronische Geräte, hergestellt aus semi-aromatischen, teilkristallinen und hochschmelzenden, nicht transparenten Polyamiden, beschrieben, die eine hohe Anfärberesistenz aufweisen sollen. Die Polyamide basieren auf den Monomeren Terephthalsäure, Isophthalsäure und aliphatischen Diaminen mit 6 Kohlenstoffatomen. Die Formmassen beinhalten ebenfalls ein Verstärkungsmittel sowie ein Weisspigment. Auch hier wird ein Weissgrad von mindestens 70 gefordert. In den Beispielen wird gezeigt, dass die Formmasse auf Basis des teilkristallinen, teilaromatischen Polyamids PA 6T/6I eine geringere Anfärbeneigung im Vergleich zu den teilkristallinen Polyamidformmassen auf Basis von PA 66 und PA 6T/66 besitzt.

Aus der EP-A-0 725 101 sind farblose, amorphe Polyamide oder deren Blends oder Legierungen und daraus herstellbare Formteile mit hoher Wechselbiegefestigkeit bekannt, die aus alkylsubstituierten cycloaliphatischen 14-22C Diaminen und unverzweigten aliphatischen 8-14C Dicarbonsäuren aufgebaut sind, oder aus unverzweigten aliphatischen 8-14C Diaminen und cycloaliphatischen 7-36C Dicarbonsäuren. Es werden die reinen farblosen, amorphen Polyamide beschrieben sowie auf Mischungen mit Homopolyamiden hingewiesen.

Die EP-A-0 837 087 beschreibt Polyamidformmassen, oder Legierungen oder Mischungen aus Polyamiden, zur Herstellung von Artikeln für (elektro-) optische Anwendungen. Die Formmasse ist dabei aus mindestens einem Polyamid-Homopolymer aus langkettigen aliphatischen Monomeren und cycloaliphatischen Monomeren aufgebaut. Als Legierungen werden Mischungen mit PA 12 oder PA 11 als Legierungskomponenten vorgeschlagen oder weitere amorphe Polyamide.

Die EP-A-1 570 983 beschreibt Werkstoffverbunde aus einem Formteil aus mindestens einer transparenten oder transluzenten färbbaren Kunststoff-Formmasse enthaltend ein Gleitmittel. Das Formteil ist mit mindestens einer transparenten oder transluzenten Oberflächenschicht, Dekorfolie, funktionalen Schicht, Gummi oder anderen Kunststoffen verbunden. Die Polyamide sind z.B. auf Basis von MACM aufgebaut, Blends werden aber nur mit aliphatischen Homopolyamiden beschrieben.

Die WO2009/132989 offenbart Polyamidformmassen, die sich durch gute Verarbeitbarkeit, insbesondere im Spritzguss, bei akzeptabler Deformation im Klimatest, guter Transparenz, geringem Haze und sogar erhöhtem Bioanteil auszeichnen. Die Polyamidformmassen auf Basis von transparenten Copolyamiden enthalten: (A) 40 bis 100 Gew.-% mindestens eines transparenten Copolyamids mit einer Glasübergangstemperatur (Tg) von wenigstens 80 °C und höchstens 150 °C, aufgebaut aus mindestens zwei voneinander verschiedenen Diaminen, ausgewählt aus einer Mischung aus (a) 50 bis 90 Mol-% MACM und/oder EACM und/oder TMACM und (b) 10 bis 50 Mol-% aliphatisches Diamin mit 9 bis 14 Kohlenstoffatomen, jeweils bezogen auf die Gesamtmenge an Diaminen, sowie - aus einer oder mehreren aliphatischen Dicarbonsäuren, insbesondere mit 6 bis 36 Kohlenstoffatomen, (B) 0 bis 60 Gew.-% mindestens eines weiteren Polymeren, (C) 0 bis 10 Gew.-% übliche Additive, wobei die Summe der Komponenten (A), (B) und (C) 100 Gew.-% ergibt. Mischungen mit anderen Polyamiden werden beschrieben, aber nur mit aliphatischen anderen Polyamiden.

EP-A-2608276 beschreibt eine Photovoltaikmodul-Rückfolie, welche mindestens eine Schicht enthält die aus einer Polyamid-Formmasse hergestellt ist, wobei diese Polyamid- Formmasse zusammengesetzt ist aus 15 bis 70 Gewichtsprozent mindestens eines transparenten Polyamids, dessen Glasübergangstemperatur auch nach der Aufnahme von Feuchtigkeit bei 85°C und 85 % relativer Feuchtigkeit mehr als 100°C beträgt, 15 bis 70 Gewichtsprozent mindestens eines aliphatischen Polyamids, 0.5 bis 3 Gewichtsprozent an UV- und Hitzestabilisatoren und 10 bis 30 Gewichtsprozent mindestens eines weiteren Zusatzstoffes, und sich die Komponenten auf 100 Gewichtsprozent der Polyamid-Formmasse ergänzen. Derartige Photovoltaikmodul-Rückfolien eignen sich zur Herstellung von Photovoltaikmodulen mit stark reduzierter Vergilbung. EP-A-1882719 beschreibt Polyamidformmassen, die bei guten mechanischen Eigenschaften einen sehr geringen Verzug aufweisen. Erreicht wird dies durch eine Kombination von transparentem Polyamid mit faserförmigen Verstärkungsstoffen sowie partikulären Füllstoffen. Verwendung finden die Formmassen für die Herstellung beliebiger Formkörper, Halbzeuge bzw. Fertigteile.

EP-A-1570983 beschreibt Werkstoffverbunde aus einem Formteil aus mindestens einer transparenten oder transluzenten, einfärbbaren Kunststoffformmasse, das mit wenigstens einer transparenten oder transluzenten Oberflächenschicht und/oder mit Dekorfolien, Funktionsfolien oder Lacken oder Kautschuken oder anderen Kunststoffen verbunden ist, wobei die zur Herstellung des Formteils, der Oberflächenschicht oder den anderen Kunststoffen verwendete Kunststoffformmasse 0,01 bis 5,0 Gew.-%, bezogen auf das Gesamtgewicht der Formmasse, mindestens ein Gleitmittel aus der Gruppe, ausgewählt aus Sorbitanestern, Sebazinsäurestem, Dodekandisäureestem, Behensäurestem, Glycerin, Glykol, Diethylenglykol, Stearoylamid, Stearylstearat, Ethylenbissteroylamid, n-Octyl-Pyrrolidon und der Gruppe der unpolaren Paraffinöle und der Tetracosane, enthält, und eine dauerhafte Haftung zu den anderen Kunststoffschichten und/oder Folien oder Lacken oder Kautschuken oder den anderen Kunststoffen erzielt wird.

DARSTELLUNG DER ERFINDUNG

Es ist entsprechend unter anderem Aufgabe der vorliegenden Erfindung, anfärberesistente Artikel sowie Verwendungen von Formmassen zur Herstellung anfärberesistenter Artikel, insbesondere Gehäuse oder Gehäuseteile für tragbare elektronische Geräte, mit verbesserter Anfärberesistenz zur Verfügung zu stellen. Darüber hinaus weisen diese Artikel gute mechanische Eigenschaften auf, insbesondere hohe Steifigkeit, hohe Festigkeit, gute Schlagzähigkeit, und hohe Dimensionsstabilität, sowie insbesondere auch gute Oberflächeneigenschaften und daneben gute Verarbeitungseigenschaften wie insbesondere eine kleine Verarbeitungsschwindung und einen geringen Verzug. Die zugrundeliegenden Polyamidformmassen zeichnen sich neben der unerwartet geringen Anfärbeneigung durch eine geringe Wasseraufnahme, ausreichende Temperaturbeständigkeit, gute Chemikalienbeständigkeit und gute mechanische Eigenschaften aus.

Erreicht wird die Anfärberesistenz indem die Artikel, die Gehäuse oder Gehäuseteile aus Formmassen enthaltend Polyamide auf Basis von cycloaliphatischen Diaminen hergestellt werden.

Anfärberesistenz im Sinne der Erfindung bedeutet, dass die Artikel bzw. Gehäuse im Kontakt mit Färbemittel des täglichen Lebens, wie z.B. Makeup (Lippenstift, Lipgloss, Wangenrouge) oder natürlichen und künstlichen Farben, wie z.B. in Softdrinks, Ketchup, Rotwein, Senf oder auch Farben und Pigmenten in Kleidern oder Leder keine oder nur sehr geringe nachhaltige Farbänderungen erfahren.

Diese Aufgabe wird durch den anfärberesistenten Artikel gemäss Anspruch 16 sowie die Verwendung gemäss Anspruch 1 gelöst insbesondere durch die Verwendung solcher Formmassen zur Herstellung von anfärberesistenten Bauteilen oder Gehäusen für tragbare elektronische Geräte.

Als Komponente (F) findet als anorganisches Weisspigment Zinksulfid Einsatz. Dieses Weisspigment verfügt bevorzugtermassen über eine mittlere Partikelgrösse (D50) im Bereich von 0.1-40 µm, bevorzugt im Bereich von 0.1-20 µm, insbesondere im Bereich von 0.1-10 µm. Das Verhältnis der faserförmigen Zuschlagsstoffe (B1) zu den anorganische Weisspigmente (F) kann im Bereich von 30:1 bis 1:5, im Bereich von 10:1 bis 1:10, im Bereich von 5:1 bis 1:5, oder im Bereich von 15:1 bis 1:2 liegen.

Die Verwendung ist dabei zur Herstellung eines anfärberesistenten Artikels, bei welchem die Anfärbeneigung (AN) des Artikels bevorzugt 2 ist, vorgesehen.

Die Komponente (A) besteht damit entweder aus einem oder mehreren Polyamiden des Aufbaus (A1) oder einer Mischung aus einem oder mehreren solchen Polyamiden mit teilaromatischen Polyamiden (A2), wobei die Komponente (A2) in dieser Mischung höchstens 50 Gew.-%, bevorzugt höchstens 40 Gew.-% und besonders bevorzugt höchstens 35 Gew.-%, bezogen auf die Polyamidmischung A, ausmacht. Somit wird Komponente A2 bevorzugt im Bereich von 0 - 40, z.B. im Bereich von 5 - 35 Gew.-%, jeweils bezogen auf Komponente A, eingesetzt.

Bevorzugtermassen liegt dabei der Anteil an Komponente (A) im Bereich von 30-90 Gew.-%, vorzugsweise im Bereich von 30-80 Gew.-%.

Der Anteil an Komponente (B) liegt bevorzugtermassen im Bereich von 10-65 Gew.-%, vorzugsweise im Bereich von 20-60 Gew.-%.

Der Anteil an Komponente (D) liegt bevorzugtermassen im Bereich von 5-25 Gew.-%, vorzugsweise im Bereich von 5-20 Gew.-%.

Der Anteil an Komponente (E) liegt bevorzugtermassen im Bereich von 0.1-2 Gew.-%, vorzugsweise im Bereich von 0.2-1.5 Gew.-%.

Artikel, Formkörper oder Formteile gemäss der Erfindung haben eine geringe Anfärbeneigung (AN). D.h. der gemäss EN ISO 11664-4 im CIELAB-Farbraum bestimmte E-Wert (Farbort) wird durch den unten beschriebenen Anfärbetest nur wenig verändert. Konkret heisst das, der im unten beschriebenen Anfärbetest ermittelte $\Delta E$-Wert ist höchstens 6, bevorzugt höchstens 5, insbesondere bevorzugt höchstens 4. Gleichzeitig weisen die Artikel sowohl vor als auch nach der Anfärbung eine Luminanz $L^*$ von bevorzugtermassen > 80, vorzugsweise > 90, insbesondere vorzugsweise > 95 auf. Bevorzugtermassen ist alternativ oder zusätzlich der Betrag von $a^*$ respektive unabhängig davon Betrag von $b^*$ jeweils < 10, vorzugsweise < 5, insbesondere vorzugsweise < 3 ganz besonders bevorzugt im Bereich von 0. Für die Bauteile sind $L^*$-Werte von > 96 besonders bevorzugt.

Die CIE $L^*$, $a^*$, und $b^*$-Werte wurden auf einem Spectrophotometer der Firma Datacolor (Gerätebezeichnung: Datacolor 650) unter den folgenden Messbedingungen vor einem weisslackierten Kontrastblech bestimmt, Messmodus: Reflexion, Messgeometrie: D/8°, Lichtart: D6510, Glanz: eingeschlossen, Kalibrierung: UV-kalibriert, Messblende: SAV (Small Area View, 9 mm illuminated, 5 mm measured). Bei Verwendung der $L^*$, $a^*$, und $b^*$-Werte von Referenz und Probe entsprechend dem CIELAB Systems (EN ISO 11664-4, bis 2011 DIN 6174) berechnet sich die Farbhelligkeitsdifferenz $\Delta L^*$ wie folgt:

$$\Delta L^* = L^*_{Probe} - L^*_{Referenz}$$

Der Farbabstand $\Delta E$ zwischen den Farborten $(L^*a^*b^*)_{Referenz}$ und $(L^*a^*b^*)_{Probe}$ wird gemäss ISO 12647 und ISO 13655 als euklidischer Abstand wie folgt berechnet:

$$\Delta E = \sqrt{(L^*_{Probe} - L^*_{Referenz})^2 + (a^*_{Probe} - a^*_{Referenz})^2 + (b^*_{Probe} - b^*_{Referenz})^2}$$

Die Anfärbeneigung (AN) im beschriebenen Anfärbetest wird durch die Änderung des Farbeindrucks $\Delta E$ quantifiziert; sie wird wie folgt klassifiziert:

AN=1: Keine oder nur sehr geringe Anfärbung ($0 \leq \Delta E \leq 2$)
AN=2: Geringe Anfärbung ($2 < \Delta E \leq 6$)
AN=3: Deutliche Anfärbung ($6 < \Delta E \leq 12$)
AN=4: Starke Anfärbung (entspricht einem $\Delta E > 12$)

Erfindungsgemässe Artikel (Formteile, Bauteile) haben eine Anfärbeneigung von 1 oder 2, d.h. der $\Delta E$-Wert liegt bei maximal 6.

Die Anfärbeneigung der Formteile wird mittels der folgenden Anfärbemedien überprüft:

- Lipgloss: Maybelline Color Sensational Cream Gloss Fabulous Pink 137 (Maybelline New York, Jade Düsseldorf, Gemey-Paris, 16 Place Vendome, 75001 Paris) oder
- Senf: Thomy scharfer Senf (Nestle Suisse AG, 1800 Vevey, Schweiz)

Diese Medien wurden aus einer grossen Gruppe getesteter Mittel ausgewählt, weil sie die stärksten Farbänderungen auf den aus Polyamid hergestellten Formteilen hervorrufen und damit die beste Unterscheidungskraft hinsichtlich der Anfärbeneigung aufweisen. So verursachen z.B. Olivenöl, Sonnencreme oder auch übliches Ketchup nur sehr geringe Farbänderungen auf den Probekörpern, was eine Differenzierung zwischen den verwendeten Polyamidformmassen erschwert bzw. unmöglich macht.

Beim Anfärbetest werden die Anfärbemedien auf die Oberfläche der Probenkörper (Dimension: 2 x 40 x 50 mm) mit einem Baumwolltupfer satt aufgetragen. Die so präparierten Probekörper sowie die unbehandelten Referenz-Probekörper werden dann einer 24 bzw. 72 stündigen Lagerung im Klimaschrank bei 65°C und einer relativen Feuchte von 90% unterworfen. Nach beendeter Lagerung werden die Probekörper auf 23°C temperiert und dann unter fliessendem, handwarmen Wasser mit einem mit wässriger Seifenlösung versehenen Schwämmchen oberflächlich gereinigt, bis die Probenoberfläche frei ist von anhaftenden Rückständen des Anfärbemediums. Die Referenz-Farbplättchen ohne Anfärbemedium werden ebenfalls dem Reinigungsschritt unterworfen. Nach Reinigung der Referenz- und Test-Plättchen werden die L*,a*,b*-Werte wie oben beschrieben bestimmt und die ΔL*- und ΔE-Werte errechnet.

Bevorzugt betrifft die vorliegende Erfindung einen Artikel bzw. Formkörper, respektive Formteile, welche wenigstens teilweise aus derartigen Polyamid-Formmassen bestehen, hergestellt unter Verwendung einer Polyamid-Formmasse wie oben und auch weiter unten angegeben, insbesondere bevorzugt in Form oder als Teil eines elektrischen oder elektronischen Bauteils, eines Gehäuses oder eines Gehäusebestandteils.

In einer bevorzugten Ausführungsform beinhaltet die vorliegende Erfindung Artikel, insbesondere Gehäuse oder Gehäuseteile, für tragbare elektronische Geräte mit verbesserter Anfärberesistenz. Mit "tragbar" ist gemeint, dass die elektronischen Geräte so gestaltet sind, damit sie bequem transportiert und an verschiedenen Orten genutzt werden können. Bei den tragbaren elektronischen Geräten handelt es sich beispielsweise um Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien usw. Mit dem Begriff Gehäuse oder Gehäuseteil ist das ganze Spektrum von Gehäuseteilen, wie z.B. Abdeckung, Abdeckplatte, Abdeckhaube oder Deckel, Rahmen oder tragende Gehäuseteile, wie z.B. Backbone gemeint, insbesondere Back Cover, Front Cover, Antennengehäuse, Rahmen, Backbone eines Mobiltelefons, Smartphones oder Computers, wobei unter Backbone ein Strukturbauteil zu verstehen ist, auf das weitere elektronische Bauteile wie z.B. Batterieanschluss, Antenne, Bildschirm, Konnektoren, Prozessoren, Keypads, Keyboards und andere elektronische Komponenten montiert werden. Das Backbone kann dabei eine innere Komponente oder eine von aussen teilweise sichtbare Struktur darstellen. Die als Abdeckung eingesetzten Gehäuseteile haben u.a. die Funktion innere Bauteile und die elektronischen Komponenten vor Verschmutzung, Krafteinflüssen (z.B. Schlag durch Herunterfallen) oder Beschädigung durch Umwelteinflüsse, wie z.B. Staub, Flüssigkeiten, Strahlung oder Gasen zu schützen. Darüber hinaus können die Gehäuse oder Gehäuseteile auch als Strukturbauteil fungieren und somit dem Gerät Festigkeit verleihen. Vorzugsweise ist die Verwendung ausgerichtet auf Bauteile oder Bereiche davon, die bei der bestimmungsgemässen Benutzung unmittelbar und ohne weitere darüber liegende Schicht an der Oberfläche liegen und damit der Verschmutzung ausgesetzt sind. So kommen auch Verwendungen als Beschichtungen von Gehäuseteilen in Frage.

In einer bevorzugten Ausführungsform ist unter Gehäuse ein Gehäuse eines Mobiltelefons oder Smartphones zu verstehen, insbesondere Back Cover, Front Cover, Antennengehäuse, Rahmen, Backbone eines Mobiltelefons. Dabei kann das Gehäuse aus einem oder mehreren Teilen bestehen. Die erfindungsgemässen Artikel, insbesondere die Gehäuse für tragbare elektronische Geräte können durch verschiedene thermoplastische Verarbeitungsprozesse, insbesondere durch Spritzguss oder Extrusion, aus den vorgeschlagenen Formmassen hergestellt werden. Bei den Artikeln handelt es sich bevorzugtermassen um einen im Spritzguss- oder Extrusionsprozess geformten Gegenstand, oder einen beschichteten Gegenstand.

Im weiteren Sinne umfasst die Erfindung aber auch Artikel bzw. Formteile, insbesondere Gehäuse oder Gehäuseteile, von Haushaltsgeräten und Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik. Darüber hinaus umfasst die Erfindung auch Garne, Fasern, Bikomponentenfasern, Stapelfasern (bevorzugt gekräuselt und/oder texturiert und/oder geschnitten auf eine Länge von 30 - 140 mm), Filamente und Monofile, hergestellt aus den erfindungsgemässen Formmassen mittels bekannten Spinnverfahren (Schmelzespinnen, Nassspinnen). Insbesondere sind dabei bevorzugt umfasst flammhemmend ausgerüstete Garne, Fasern, Stapelfasern, Bikomponentenfasern, Filamente oder Monofilamente für die Herstellung von textilen Geweben, wie z.B. Sitzbezügen, Teppichen, Vorhängen oder Gardinen, für den Einsatz in öffentlichen Gebäuden und in Restaurants oder in mobilen Verkehrsmitteln, insbesondere in Flugzeugen, Zügen und Kraftfahrzeugen.

Die **Komponente (A)** der Formmasse enthält wenigstens 50 Gew.-% mindestens eines Polyamids auf Basis von cycloaliphatischen Diaminen (A1) und bis zu 50 Gew.-% eines teilaromatischen Polyamids (A2).

Die **Komponente (A1)** enthält oder besteht bevorzugt aus einem Polyamid, welches aus cycloaliphatischen Diaminen und weiteren aliphatischen, cycloaliphatischen oder aromatischen Monomeren aufgebaut sein kann. Namentlich enthält oder besteht Komponente (A1) aus amorphen oder mikrokristallinen Polyamiden auf Basis cycloaliphatischer Diamine, die eine Glasübergangstemperatur von wenigstens 100°C, bevorzugt von wenigstens 120 oder 130°C und besonders bevorzugt von wenigstens 140 oder 150°C, dabei aber bevorzugt von nicht mehr als 220°C oder nicht mehr als 200°C besitzen. Dabei sind sowohl die amorphen als auch die mikrokristallinen Polyamide transparent im für das menschliche Auge sichtbaren Wellenlängenbereich, insbesondere solange sie (noch) nicht mit Pigmenten versetzt sind. Transparent bedeutet hierbei, dass Formteile aus den Polyamiden A2 allein eine hohe Lichttransmission (LT) von wenigstens 85, bevorzugt wenigstens 88% und insbesondere von mehr als 90% aufweisen. Der Wert der Lichttransmission, welche als Mass für die Transparenz verwendet wird, ist dabei im Rahmen der vorliegenden Anmeldung stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt. Die amorphen Polyamide haben keine messbare oder nur sehr geringe Schmelzwärmen (Schmelzenthalpie) von höchstens 4 J/g, bevorzugt von höchstens 2 J/g (bestimmt gemäss ISO 11357 an Granulat, Differential Scanning Calorimetry (DSC) mit einer Aufheizrate von 20 °C/min). Die erfindungsgemässen mikrokristallinen Polyamide, haben kleine Kristallite, die das sichtbare Licht im wesentlichen nicht streuen, und haben moderate Schmelzwärmen im Bereich von 4 - 25 J/g, bevorzugt von 8 - 22 J/g (bestimmt gemäss ISO 11357 an Granulat, Differential Scanning Calorimetry (DSC) mit einer Aufheizrate von 20 °C/min).

Die Konzentration des cycloaliphatischen Diamins enthalten in Komponente (A1) beträgt bevorzugt wenigstens 20 Mol-%, insbesondere wenigstens 40 Mol-% und besonders bevorzugt wenigstens 50 oder 60 Mol-%, bezogen auf die Summe aller in (A1) enthaltenen Diaminen. Besonders bevorzugt wird eine Konzentration der cycloaliphatischen Diamine im Bereich von 60 bis 100 Mol-%, bezogen auf die Summe aller Diamine von Komponente (A1).

In Bezug auf Komponente (A1) geeignete cycloaliphatische Diamine sind solche mit 6 bis 24 Kohlenstoffatomen, wie z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,6-Norbornandiamin oder 2,6-Bis-(aminomethyl)-norbornan oder 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen, insbesondere bevorzugt sind Methylgruppen. In einer besonders bevorzugten Ausführungsform werden als alkylsubstituiertes Bis-(aminocyclohexyl)methan das Bis-(4-amino-3-methyl-cyclohexyl)-methan (MACM) und das Bis-(4-Amino-3,5-dimethyl-cyclohexyl)-methan (TMDC) eingesetzt. Besonders bevorzugt werden die cycloaliphatischen Diamine PACM, MACM und TMDC.

Neben den cycloaliphatischen Diaminen können auch, in beschränktem Umfang, andere aliphatische und aromatische Diamine zum Aufbau der Polyamide (A1) verwendet werden, wie z.B. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin. Bevorzugt werden geradkettige aliphatische Diamine mit 6 -10 Kohlenstoffatomen, insbesondere 1,6-Hexandiamin. Diese anderen Diamine innerhalb der Komponente (A1) machen aber nicht mehr als 80 Mol-% der Gesamtheit der Diamine der Komponente (A1) aus, vorzugsweise machen sie nicht mehr als 60 Mol-%, insbesondere bevorzugt nicht mehr als 40 Mol-% der Gesamtheit der Diamine der Komponente (A1) aus. Insbesondere bevorzugt ist die Komponente (A1) im Wesentlichen frei von solchen weiteren anderen Diaminen, die nicht cycloaliphatisch sind.

Für das Polyamid (A1) geeignete Dicarbonsäuren (a2) sind: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus. Bevorzugt werden aromatische Dicarbonsäuren und geradkettige aliphatische Dicarbonsäuren. Insbesondere bevorzugt werden die Dicarbonsäuren Terephthalsäure, Isophthalsäure, Sebazinsäure sowie Dodecandisäure. Besonders bevorzugt wird ein Polyamid (A1), dessen Anteil an Terephthalsäure höchstens 50 mol-%, bezogen auf die Summe aller Dicarbonsäuren von Komponente (A1), beträgt. Insbesondere ist es bevorzugt, wenn der Anteil der Terephthalsäure in Komponente A1 kleiner 45 mol-% ist oder keine Terephthalsäure in Komponenten (A1) enthalten ist.

Die Polyamide (A1) können als weitere Monomere auch Lactame oder Aminocarbonsäure, insbesondere α,ω-Aminosäuren oder Lactame mit 6 bis 12 Kohlenstoffatome enthalten, wobei beispielhaft nachfolgende Auswahl genannt sei: m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA). Besonderes bevorzugt sind Caprolactam, α,ω-Aminocapronsäure, Laurinlactam, α,ω-Aminoundecansäure und α,ω-Aminododecansäure. Der Anteil an Lactamen oder Aminosäuren in Komponente (A1) beträgt 0 bis 45 mol-%, bevorzugt 2 -40 mol-% und besonders bevorzugt 3 bis 35 mol-%, jeweils bezogen auf die Summe aller (A1) bildender Monomere, wobei die Konzentration des cycloaliphatischen Diamins bezogen auf die Diamine (a1) stets mindestens 20 mol-% beträgt.

Bevorzugte Polyamide (A1) auf Basis von cycloaliphatischen Diaminen sind MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 oder Copolyamide, wie z.B. MACMI/12, MACMT/12, MACMI/MACMT/12, 6I/6T/MACMI/MACMT/12, 3-6T, 6I/MACMI/MACMT, 6I/PACMI/PACMT, 6I/6T/MACMI, MACMI/MACM36, 12/PACMI oder 12/MACMT, 6/PACMT, 6/IPDT oder Mischungen daraus MACM9-18/PACM9-18, MACM9-18/TMDC9-18, TMDC9-18/PACM9-18 insbesondere MACM10/PACM10, MACM12/PACM12 und MACM14/PACM14 und Mischungen davon.

**Komponente (A2)** enthält oder besteht aus teilaromatischen Polyamiden auf Basis von aromatischen Dicarbonsäuren, insbesondere Terephthalsäure, und aliphatischen Diaminen. Die teilaromatischen Polyamide können dabei eine amorphe oder teilkristalline Morphologie aufweisen. Bevorzugt werden die teilkristallinen, teilaromatischen Polyamide verwendet. Die teilkristallinen Polyamide der Komponente (A2) haben eine Schmelztemperatur von wenigstens 250°C, bevorzugt von wenigstens 260°C und insbesondere bevorzugt von wenigstens 270°C. Bevorzugt liegt die Schmelztemperatur im Bereich von 250 bis 330°C, insbesondere im Bereich von 260 bis 320°C. Die Schmelzenthalpie beträgt wenigstens 30 J/g, bevorzugt wenigstens 35 J/g und besonders bevorzugt mindestens 40 J/g.

Der Anteil der Terephthalsäure an der Gesamtmenge an Dicarbonsäuren von Komponente (A2) liegt vorzugsweise im Bereich von 50 bis 100 mol-%, bevorzugt im Bereich von 60 bis 95 mol-% und besonders bevorzugt im Bereich von 65 bis 90 mol-%.

Als Diamine für Komponente (A2) kommen z.B. folgende Monomere in Frage: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin, wobei 1,6-Hexandiamin, 1,10-Decandiamin und 1,12-Dodecandiamin bevorzugt werden.

Die Polyamide (A2) können, bevorzugt neben Terephthalsäure, noch folgende Dicarbonsäuren enthalten: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus. Bevorzugt werden Adipinsäure, Isophthalsäure, Sebazinsäure und Dodecandisäure.

Weiterhin können die Polyamide (A2) auch Lactame oder Aminocarbonsäuren, insbesondere α,ω-Aminosäuren oder Lactame mit 6 bis 12 Kohlenstoffatomen enthalten, wobei beispielhaft nachfolgende Auswahl genannt sei: m-Aminobenzoesäure, p-Aminobenzoesäure, Caprolactam (CL), α,ω-Aminocapronsäure, α,ω-Aminoheptansäure, α,ω-Aminooctansäure, α,ω-Aminononansäure, α,ω-Aminodecansäure, α,ω-Aminoundecansäure (AUA), Laurinlactam (LL) und α,ω-Aminododecansäure (ADA). Besonders bevorzugt sind Caprolactam, α,ω-Aminocapronsäure, Laurinlactam, α,ω-Aminoundecansäure und α,ω-Aminododecansäure.

Die teilaromatischen Polyamide (A2) beruhen vorzugsweise entweder auf aromatischen Dicarbonsäuren mit 8 bis 18, bevorzugt 8 bis 14 Kohlenstoffatomen oder auf aromatische Struktureinheiten aufweisenden Diaminen, wie z.B. PXDA und/oder MXDA. Bevorzugte aromatische Dicarbonsäuren sind Terephthalsäure, Naphthalindicarbonsäure und Isophthalsäure. Bevorzugte teilaromatische Polyamide beruhen auf den folgenden Polyamidsystemen: 4T, 5T, DT, 6T, 9T, MT, 10T, 12T, 4I, 5I, DI, 6I, 9I, MI, 10I, 12I (D steht für 2-Methylpentandiamin und M steht für 2-Methyloctandiamin). Diese können, sofern es die Verarbeitungstemperatur zulässt, als Homopolyamide sowie als binäre, ternäre oder quaternäre Copolyamide miteinander kombiniert werden. Des Weiteren können auch aliphatische Polyamidsysteme, wie z.B. PA46, PA6, PA66, PA11, PA12, PA1212, PA1010, PA1012, PA610, PA612, PA69, PA810 hinzukombiniert werden. Bevorzugte teilaromatische Polyamide sind: 6T/6I, 6T/10T, 10T/612, 11/10T, 12/10T, 10T/1010, 10I/10T, 10T/1012, 9MT, 12T.

Bei den Polyamiden (A2) sind die teilkristallinen Copolyamide 6T/6I, 10T/6T, 10T/612 sowie MXD6, MXD10, MXD6/MXDI, PXD10, MXD10/PXD10 besonders bevorzugt.

Die amorphen teilaromatischen Polyamide (A2) beruhen bevorzugt auf geradkettigen und/oder verzweigten aliphatischen Diaminen und aromatischen Dicarbonsäuren und enthalten vorzugsweise weniger als 20 Mol-% cycloaliphatische Diamine und sind bevorzugt im Wesentlichen frei von cycloaliphatischen Diaminen. Hinsichtlich den amorphen teilaromatischen Polyamiden (A2) sind die Systeme 6T/6I oder 10T/10I oder 3-6T (3-6 = 2,2,4- bzw. 2,4,4-Trimethylhexandiamin) besonders bevorzugt. Die Systeme 6T/6I oder 10T/10I haben einem Anteil von weniger als 50 Mol-% 6T- bzw. 10T-Einheiten, wobei ein Zusammensetzungsbereich 6T:6I bzw. 10T/10I von 20:80 bis 45:55, insbesondere 25:75 bis 40:60 bevorzugt wird. Insbesondere wird bevorzugt, wenn Komponente A höchstens 20 Gew.-%, bevorzugt höchstens 10 Gew.-% und besonders bevorzugt kein amorphes teilaromatisches Polyamid (A1) enthält.

In einer bevorzugten Ausführungsform werden die Polyamide (A2) aus 55 bis 100 mol-% Terephthalsäure, 0 bis 45 mol-% aliphatischen Dicarbonsäuren mit 6 bis 12 Kohlenstoffatomen, 55 bis 95 mol-% linearen aliphatischen Diaminen mit 9-12 C-Atomen und 5 bis 45 mol-% aliphatischen Diaminen mit 4 bis 8 C-Atomen gebildet. Dabei werden die Diamine mit 10 und 12 Kohlenstoffatomen, also 1,10-Decandiamin und 1,12-Dodecandiamin, besonders bevorzugt. Unter den Diaminen mit 4-8 C-Atomen wird 1,6-Hexandiamin bevorzugt. Beispiele für solche bevorzugten Polyamide sind: 10T/612 (80:20) und 10T/6T (85:15).

Gemäss einer weiteren bevorzugten Ausführungsform ist die Komponente (A2) ein teilaromatisches, teilkristallines Copolyamid aufgebaut aus 72.0-98.3 Gew.-% Terephthalsäure (TPS), 28.0-1.7 Gew.-% Isophthalsäure (IPS), 51.0-80.0 Gew.-% 1,6-Hexandiamin (HMDA) und 20.0-49.0 Gew.-% C9-C12 Diamin, wobei es sich beim C9-C12 Diamin vorzugsweise um ein Diamin ausgewählt aus der Gruppe: 1,9-Nonandiamin, Methyl-1,8-Octandiamin, 1,10-Decandiamin, 1,11-Undecandiamin, 1,12-Dodecandiamin, oder eine Mischung derartiger Diaminen handelt, wobei 1,10-Decandiamin und 1,12-Dodecandiamin bevorzugt sind, und besonders 1,10-Decandiamin allein bevorzugt ist. Damit ist also ein Polyamidsystem PA 10T/10I/6T/6I bevorzugt, wobei obige Konzentrationen gelten.

Bezüglich einer Polymermischung (A) enthaltend die Polyamidkomponenten A1 und A2, werden folgende Zusammensetzungen bevorzugt:

(A1): MACM12 oder MACMI/12 oder TMDC12 oder MACMT/MACMI/12;
(A2): 6T/6I, wobei das Mol-Verhältnis im Bereich von 60:40 bis 80:20 liegt oder insbesondere im Bereich von 65:35 bis 75:25 beträgt, wobei das Verhältnis 70:30 besonders bevorzugt ist.
(A1): MACM12 oder MACMI/12 oder TMDC12 oder MACMT/MACMI/12;
(A2): 10T/6T, 12T/6T, 10T/11, 10T/12, 10T/1010, 10T/1012, 10T/106, 10T/126, oder 10T/612, wobei das Mol-Verhältnis im Bereich von 60:40 bis 95:5 liegt oder insbesondere im Bereich von 70:30 bis 90:10 liegt.

Dabei ist der Anteil (A1) 50 - 95 Gew.-%, bevorzugt 60 - 90 Gew.-%, besonders bevorzugt 70 - 90 Gew.-%, bezogen auf die Mischung (A).

Die erfindungsgemäß eingesetzte Matrix der Polyamidformmassen basiert, wie oben beschrieben wurde, bevorzugt auf amorphen Polyamiden oder auf Mischungen aus amorphen Polyamiden und teilkristallinen, teilaromatischen Polyamiden. Diese Matrix kann weiterhin bevorzugtermassen Schlagzähmodifier oder weitere, von Komponente A verschiedene Polymere enthalten. Besonders bevorzugt werden Formmassen, deren Matrices bezüglich der Polymere nur aus den Komponenten A1 und A2 bestehen.

Die Polyamide (A1) oder (A2) haben vorzugsweise eine Lösungsviskosität $\eta_{rel}$, gemessen in m-Kresol (0,5 Gew.-%, 20°C) im Bereich von 1,4 bis 3.0, bevorzugt im Bereich von 1,5 bis 2.7, insbesondere im Bereich von 1,5 bis 2.4.

Zusammenfassend lässt sich festhalten, dass es sich bevorzugtermassen bei der Komponente (A1) um ein Homo-Polyamid und/oder Copolyamid aufgebaut aus cycloaliphatischen Diaminen und weiteren aliphatischen oder aromatischen Monomeren handelt, bevorzugt um eine Mischung aus einem amorphen Polyamid auf Basis cycloaliphatischer Diamine und einem amorphen, teilaromatischen Polyamid (A2) und/oder einem teilkristallinen, teilaromatischen Polyamid (A2), wobei bevorzugtermassen die Polyamide der Komponente (A1) ausgewählt sind aus folgender Gruppe: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC18 oder Copolyamiden davon, wie z.B. MACM10/PACM10, MACM12/PACM12, MACM14/PACM14, PACM10/TMDC10, PACM12/TMDC12, PACM14/TMDC14 oder Copolyamide MACMI/12, MACMT/12, 6I/6T/MACMI/MACMT/12, 6I/MACMI/MACMT, 6I/PACMI/PACMT, 6I/6T/MACMI, MACMI/MACM36, 12/PACMI, 12/MACMT, 6/PACMT, 6/IPDT, MACM10/TMDC10, MACM12/TMDC12, sowie Mischungen respektive Blends davon. Besonderes bevorzugt sind MACM10, MACM12, MACM14, PACM10, PACM12, PACM14, TMDC10, TMDC12, TMDC14, MACMI/12, MACMI/MACMT/12 und 6T/6I/MACMT/MACMI/12.

Die Polyamide A2 sind bevorzugtermassen ausgewählt aus folgender Gruppe: 6T/6I, 6T/10T, 6T/10T/10I, 6T/12, 11/10T, 12/10T, 10T/1010, 10T/612, 10I/10T, 10T/1012, 9MT, 12T sowie Mischungen respektive Blends davon.

Bevorzugtermassen enthält die Formmasse 10 - 65 Gew.-%, insbesondere bevorzugt 20 - 60 Gew.-% an Füll- und Verstärkungsstoffen **(Komponente B)**. Weiterhin wird bevorzugt, wenn das Verhältnis der faserförmigen Zuschlagsstoffe (B1) zu den partikulären Zuschlagsstoffen (B2) im Bereich von 10:1 bis 1:10 oder im Bereich von 5:1 bis 1:5 liegt. Insbesondere wird bevorzugt, wenn Komponente (B) ausschliesslich durch faserförmige Zuschlagsstoffe (B1) gebildet wird, d.h. keine partikulären Füllstoffe (B2) in der Formmasse vorhanden sind.

Vorzugsweise ist die Komponente (B1) ausgewählt aus der Gruppe bestehend aus: Glasfasern, Kohlenstofffasern, Graphitfasern, Aramidfasern, Nanotubes. Die Fasern der Komponente (B1) können mit kreisförmiger oder nicht-kreisförmiger Querschnittsfläche vorliegen. Besonders bevorzugt sind Glasfasern.

Bevorzugt ist Komponente (B1) eine Glasfaser, die im Wesentlichen aus den Komponenten Siliciumdioxid, Calciumoxid und Aluminiumoxid aufgebaut ist oder besteht und das Gewichtsverhältnis $SiO_2/(CaO+MgO)$ kleiner 2.7, bevorzugt kleiner 2.5 und insbesondere zwischen 2.1 und 2.4 ist. Insbesondere handelt es sich bei Komponente B1 um eine E-Glasfaser gemäss ASTM D578-00.

Erfindungsgemäss kann es sich bei der Glasfaser (Komponente B1) auch um eine hochfeste Glasfaser handeln, die vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid beruht, wobei eine Zusammensetzung von 58-70 Gew.-% Siliciumdioxid ($SiO_2$), 15-30 Gew.-% Aluminiumoxid ($Al_2O_3$), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO2), Boroxid ($B_2O_3$), Titandioxid

($TiO_2$) oder Lithiumoxid ($Li_2O$) bevorzugt wird. Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente (B1) sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Glasfasern der Komponente (B1) können in Form von Kurzfasern, bevorzugt in Form von Schnittglas mit einer Länge im Bereich von 0.2-20 mm, oder in Form von Endlosfasern vorliegen. Somit enthalten die Formmassen 0 bis 70 Gew.-%, bevorzugt 10 bis 65 Gew.-% und besonders bevorzugt 20 bis 60 Gew.-% einer Glasfaser (B1), die in Form von sogenannten Kurzfasern (z.B. Schnittglas mit einer Länge von 0.2-20 mm) oder Endlosfasern (Rovings) verwendet wird.

Die erfindungsgemässen Glasfasern der Komponente (B1) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 $\mu$m, bevorzugt im Bereich von 6-17 $\mu$m und besonders bevorzugt im Bereich von 6-13 $\mu$m. Sie werden bevorzugt als Kurzglasfaser (Schnittglas mit einer Länge von 0.2 bis 20 mm, bevorzugt 2-12 mm) eingesetzt.

Bei den flachen Glasfasern der Komponente (B1), also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 $\mu$m, insbesondere im Bereich von 15 bis 30 $\mu$m und die Länge der Nebenquerschnittsachse im Bereich von 3 bis 20 $\mu$m, insbesondere im Bereich von 4 bis 10 $\mu$m liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponente (B1) als Roving eingesetzten hochfesten Glasfasern weisen bevorzugt einen Durchmesser von 8 bis 20 $\mu$m, bevorzugt von 12 bis 18 $\mu$m auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponente (B1), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

Als **partikuläre Zuschlagsstoffe** der **Komponente (B2)** kommen dem Fachmann in dieser Funktion bekannte Füllstoffe in Frage. Hierzu zählen insbesondere partikuläre Füllstoffe ausgewählt aus der Gruppe bestehend aus: Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Eisenoxid, Eisenmanganoxid, Metalloxide, insbesondere Spinelle, wie z.B. Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein. Bevorzugtermassen verfügt die Komponente (B2) und/oder aber auch die Komponente (F) über eine mittlere Partikelgrösse (D50) im Bereich von 0.1-40 $\mu$m, bevorzugt im Bereich von 0.2-20 $\mu$m, insbesondere im Bereich von 0.3-10 $\mu$m. Bevorzugt wird eine Form der partikulären Füllstoffe, bei denen die Aspektverhältnisse L/b1 und L/b2 beide höchstens 10, insbesondere höchstens 5 sind, wobei die Aspektverhältnisse durch die Quotienten aus grösster Länge L des Teilchens zu dessen mittleren Breite b1 oder b2 beschrieben werden. Dabei liegen b1 und b2, die senkrecht zueinander angeordnet sind, in einer zur Länge L senkrechten Ebene.

Des weiteren bevorzugtermassen verfügt die Komponente (B2) über einen von null verschiedenen Absorptionskoeffizienten für UV-, VIS-oder IR-Strahlung, insbesondere für Laserstrahlung, bevorzugt bei einer Wellenlänge im Bereich von 1064 nm, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

In einer weiteren Ausführungsform enthalten die Formmassen als **Komponente (D)** 0 - 25 Gew.-%, bevorzugt 5- 25 Gew.-%, besonders bevorzugt 8 - 22 Gew.-% Flammschutzmittel, insbesondere halogenfreie Flammschutzmittel. Bevorzugte Flammschutzmittel sind Phosphonate, Alkylphosphonate, zyklische Phosphonate und Phosphinate. Bevorzugtermassen umfasst das Flammschutzmittel dabei 60 - 100 Gew.-%, bevorzugt 70 - 98 Gew.-%, insbesondere 80 - 96 Gew.-% eines geradkettigen oder zyklischen Phosphonats, Phosphinsäuresalzes und/oder Diphosphinsäuresalzes (Komponente (D1)) sowie 0 - 40 Gew.-%, bevorzugt 2 - 30 Gew.-%, insbesondere 4 - 20 Gew.-% eines Melaminpolyphosphats oder anderen Synergisten und/oder eines Stickstoff und Phosphor enthaltenden Flammschutzmittels (Komponente (D2)), wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure. Als Metallion der Phosphinsäuresalze oder Diphosphinsäuresalze werden bevorzugt Aluminium-, Calcium- und Zink-Ionen verwendet. Derartige Flammschutzmittel sind aus dem Stand der Technik bekannt. Hierzu wird auf die DE 103 46 3261 verwiesen. Bevorzugte Synergisten (Komponente D2) sind: Bariumcarboxylat, sauerstoff-, stickstoff- oder schwefelhaltigen Metallverbindungen, insbesondere der Metalle Aluminium, Calcium, Magnesium, Barium, Natrium, Kalium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Bariumcarbonat, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat. Auch möglich sind Systeme wie Calciumstearat, Zinkstearat, Magnesiumstearat, Kaliumpalmitat, Magnesiumbehenat. Als konkrete Beispiele für solche Flammschutzmittel seien genannt: Exolit 1230 (Clariant), Exolit 1312 (Clariant), Aflammit PLF 710 (Thor). Amgard CU (Rhodia). Natürlich können die erfindungsgemäßen thermoplastischen Polyamidformmassen weiterhin übliche und dem Fachmann allgemein bekannte Zusatzstoffe in Form der **Komponente (E)** enthalten, die vorzugsweise aus der Gruppe bestehend aus Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, Pigmenten (verschieden von Weisspigmenten), Farbstoffen, Markierungsstoffen und Mischungen hiervon ausgewählt sind.

Weitere Ausführungsformen sind in den abhängigen Ansprüchen angegeben.

BESCHREIBUNG BEVORZUGTER AUSFÜHRUNGSFORMEN

Die Erfindung soll nachfolgend unter Verwendung von spezifischen Ausführungsbeispielen (B) beschrieben und mit den weniger leistungsfähigen Systemen nach dem Stand der Technik (VB) verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

Beispiele B1 bis B24 und Vergleichsbeispiele VB1 bis VB7

Die in den Tabellen 2 bis 8 angegebenen Komponenten werden in einem zweiwelligen Extruder der Firma Werner und Pfleiderer mit einem Schneckendurchmesser von 25 mm bei vorgegebenen Prozessparametern (siehe Tabelle 1) compoundiert, wobei die Polyamidgranulate sowie die Zusatzstoffe in die Einzugszone dosiert werden, während die Glasfaser über einen Sidefeeder 3 Gehäuseeinheiten vor der Düse in die Polymerschmelze dosiert wird. Das Temperaturprofil 1 wurde für die Beispiele VB1, VB3, VB6, B1, B2, B3, B4, B5, B6, B7, B8, B9, B10, B11, B12, B13, B17, B18, und B20 bis B24, das Temperaturprofil 2 für die Beispiele VB2, VB4, VB5, VB7 und B14, B15, B16 und B19 verwendet. Die Compounds zusammengefasst in Tabelle 4, bis 7 wurden als Strang aus einer Düse mit 2.5 mm Durchmesser abgezogen und nach Wasserkühlung granuliert. Das Granulat wird 24 Stunden bei 110°C im Vakuum von 30 mbar getrocknet.

Tabelle 1: Prozessparameter Compoundierung

| Parameter [Einheit] | Temperaturprofil 1 | Temperaturprofil 2 |
|---|---|---|
| Temperatur Zone 1 [°C] | 70-90 | 80-100 |
| Temperatur Zone 2 [°C] | 190-210 | 290-310 |
| Temperatur Zone 3 bis 10 [°C] | 270-290 | 320-340 |
| Temperatur Zone 11 [°C] | 270-290 | 310-330 |
| Temperatur Zone 12 [°C] | 270-290 | 310-330 |
| Temperatur Düsenkopfes [°C] | 275-295 | 320-340 |
| Schmelzetemperatur [°C] | 280-300 | 320-.340 |
| Durchsatz [kg/h] | 8-12 | 8-12 |
| Schneckendrehzahl [U/min] | 150-200 | 150-200 |

Die Compounds werden mit einer Spritzgussmaschine Arburg Allrounder 320-210-750 zu Probekörpern bei einer definierten Massetemperatur und einer definierten Werkzeugtemperatur (siehe Tabelle 2) verspritzt.

Tabelle 2: Masse- und Werkzeugtemperatur bei der Spritzgussverarbeitung

| Beispiel | Werkzeugtemperatur [°C] | Massetemperatur [°C] |
|---|---|---|
| VB1 | 40 | 250 |
| B1, B2, VB4 | 80 | 280 |
| B16, B4, B21-B24 | 80 | 300 |
| B6 | 40 | 260 |
| VB3 | 40 | 275 |
| B3, B15, B17, B19 | 85 | 275 |
| B7, B8, B9, B13 | 85 | 290 |
| VB6 | 60 | 270 |
| B18, VB5, B5, B10, B11, B12, B14 | 100 | 300 |
| VB2 | 120 | 330 |
| VB7 | 130 | 330 |

Tabelle 3: Einfluss der Anfärbemethode (Anfärbemedium: Maybelline Color Sensational Cream Gloss Fabulous Pink 137) auf $\Delta L^*$ und $\Delta E$ anhand der Beispiele B2 und B16 und der Vergleichsbeispiele VB3 und VB7

| Anfärbemethode | B2 | | B17 | | VB3 | | VB7 | |
|---|---|---|---|---|---|---|---|---|
| Konzentration des Anfärbemediums; Lagerdauer | $\Delta L^*$ | $\Delta E$ | $\Delta L^*$ | $\Delta E$ | $\Delta L^*$ | $\Delta E$ | $\Delta L^*$ | $\Delta E$ |
| **Methode A** 100% (ohne Sebum); 72 h (65°C/ 90% r.F.) | -0.4 | 1.1 | -0.4 | 0.89 | -3.8 | 33 | -2.6 | 7.7 |
| **Methode B** 100% (ohne Sebum); 24 h (65°C/ 90% r.F.) | | 0.53 | | 0.41 | | 26 | | 5.2 |
| **Methode C** 25% in Sebum; 24h (65°C/90% r.F.) | | 0.18 | | 0.17 | | 17 | | 3.1 |

Wie aus Tabelle 3 zu ersehen, wird die Farbhelligkeitsdifferenz ΔL* und der Farbabstand ΔE durch die Verdünnung des Anfärbemediums mit Sebum unabhängig von der zugrundeliegenden Formmasse reduziert. Die Werte für ΔL* und ΔE nehmen bei Verlängerung der Lagerungsdauer von 24h auf 72h deutlich zu und der nach 24h gemessen ΔE-Wertes wird in einigen Fällen mehr als verdoppelt. Bei allen drei Anfärbeversuchen der Artikel von Beispiel B2 und B16 ergibt sich eine Anfärbeneigung AN=1, dennoch erhöht sich der ΔE um den Faktor 5 bzw. 6, wenn anstatt Methode C die Anfärbemethode A gewählt wird. Beim Vergleichsbeispiel VB7 resultiert mit der Anfärbemethode C eine Anfärbeneigung AN=2 und mit Methode A eine Anfärbeneigung AN=3. Aufgrund der intensiveren Anfärbung werden alle weiteren beschriebenen Anfärbeversuche mit der Methode A ausgeführt, d.h. es wird kein Sebum zur Verdünnung des Anfärbemediums eingesetzt und die Proben werden 72 Stunden bei 65°C und einer relativen Feuchte von 90% gelagert.

Tabelle 4: Zusammensetzung, Anfärbeneigung (AN), ΔL* und ΔE (bestimmt mit Anfärbemethode A) der Vergleichsbeispiele VB1 bis VB7

| | Einheit | VB1 | VB2 | VB3 | VB4 | VB5 | VB6 | VB7 |
|---|---|---|---|---|---|---|---|---|
| *Zusammensetzung* | | | | | | | | |
| PA12 | Gew.-% | 96.15 | | | | | 35 | |
| 6T/66 (60:40) | Gew.-% | | 62.5 | | | | | |
| MXD6 | Gew.-% | | | 96.15 | | | | |
| 6T/6I (33:67) | Gew.-% | | | | 96.15 | | | |
| 10T/612 (80:20) | Gew.-% | | | | | 96.15 | | |
| 10T/6T (85:15) | Gew.-% | | | | | | | 50 |
| MACM12 | Gew.-% | | | | | | 15 | |
| Hitzestabilisator | Gew.-% | | 0.5 | | | | | |
| Zinksulfid | Gew.-% | 3.85 | | 3.85 | 3.85 | 3.85 | | |
| Titandioxid | Gew.-% | | 15 | | | | | 20 |
| Calciumcarbonat | Gew.-% | | | | | | | 20 |
| Glasfasern A | Gew.-% | | 22 | | | | 50 | 10 |
| *Anfärbeneigung* | | | | | | | | |
| ΔL Senf | | -2.2 | -3.9 | -13.2 | -3.8 | -0.8 | -2.0 | -1.0 |
| ΔL Lippenstift | | -5.3 | -12.8 | -3.8 | -6.5 | -3.9 | -3.3 | -2.6 |
| ΔE Senf | | 50 | 29 | 44 | 33 | 21 | 39 | 11 |
| ΔE Lipgloss | | 30 | 47 | 33 | 21 | 16 | 14 | 7.7 |
| AN (Senf, Lipgloss) | | 4 | 4 | 4 | 4 | 4 | 4 | 3 |
| *Mechanische Eigenschaften (trockener Zustand)* | | | | | | | | |
| Zug-E-Modul | MPa | 1600 | | 4000 | 2800 | | 14000 | 7300 |
| Reissfestigkeit | MPa | 50 | | 57 | 71 | | 170 | 85 |
| Reissdehnung | % | >50 | | 30 | 137 | | 2.6 | 1.4 |
| Schlagzähigkeit 23°C | kJ/m$^2$ | o.B. | | 50 | | | 90 | 32 |
| Kerbschlagzähigkeit 23°C | kJ/m$^2$ | o.B. | | 4 | | | 20 | 4 |
| Linearer Spritzschwund längs | % | 0.80 | 0.15 | | | 0.65 | | |
| Linearer Spritzschwund quer | % | 0.90 | 0.80 | | | 1.10 | | |
| Verzug | % | 0.10 | 0.65 | | | 0.45 | | |
| o.B. = ohne Bruch; Verzug = \|Linearer Spritzschwund quer - Linearer Spritzschwund längs \| | | | | | | | | |

Tabelle 5: Zusammensetzung, Anfärbeneigung (AN), ΔL* und ΔE (bestimmt mit Anfärbemethode A) der Beispiele B1 bis B6

| | Einheit | B1 | B2 | B3 | B4 | B5 | B6 |
|---|---|---|---|---|---|---|---|
| *Zusammensetzung* | | | | | | | |
| MACM12 | Gew.-% | 100 | 96.15 | 47.8 | | | |
| MACMI/12 | Gew.-% | | | | 96.15 | | |
| MACMT/MACMI/12 | Gew.-% | | | | | 96.15 | |
| MACM10 | Gew.-% | | | | | | 96.15 |
| Hitzestabilisator | Gew.-% | | | 0.35 | | | |
| Zinksulfid | Gew.-% | | 3.85 | 3.85 | 3.85 | 3.85 | 3.85 |
| Glasfasern C | Gew.-% | | | 48 | | | |
| *Anfärbeneigung (trockener Zustand)* | | | | | | | |
| ΔL Senf | | -0.4 | -0.2 | -0.2 | +/-0.0 | -0.2 | -0.4 |
| ΔL Lippenstift | | -0.7 | -0.4 | -0.7 | -0.3 | -0.5 | -0.2 |
| ΔE Senf | | 1.3 | 3.1 | 3.5 | 0.6 | 0.7 | 2.5 |
| ΔE Lipgloss | | 0.8 | 1.1 | 1.9 | 0.5 | 0.5 | 1.2 |
| AN (Senf, Lipgloss) | | 1 | 2 | 2 | 1 | 1 | 2 |
| *Mechanische Eigenschaften* | | | | | | | |
| Zug-E-Modul | MPa | 1500 | | | 2300 | 2200 | |
| Reissfestigkeit | MPa | 50 | | | 50 | 65 | |
| Reissdehnung | % | 118 | | | >50 | >50 | |
| Schlagzähigkeit 23°C | kJ/m$^2$ | | | | o.B. | o.B. | |
| Kerbschlagzähigkeit 23°C | kJ/m$^2$ | | | | 8 | 10 | |
| Linearer Spritzschwund längs | % | 0.60 | 0.55 | 0.03 | 0.58 | 0.58 | 0.57 |
| Linearer Spritzschwund quer | % | 0.65 | 0.60 | 0.26 | 0.62 | 0.62 | 0.62 |
| Verzug | % | 0.05 | 0.05 | 0.23 | 0.04 | 0.04 | 0.05 |
| o.B. = ohne Bruch; Verzug = \|Linearer Spritzschwund quer - Linearer Spritzschwund längs \| | | | | | | | |

Tabelle 6: Zusammensetzung, Anfärbeneigung (AN), ΔL* und ΔE (bestimmt mit Anfärbemethode A) der Beispiele B7 bis B13

| | Einheit | B7 | B8 | B9 | B10 | B11 | B12 | B13 |
|---|---|---|---|---|---|---|---|---|
| *Zusammensetzung* | | | | | | | | |
| MACMI/12 | Gew.-% | 66.85 | 47.65 | 37.95 | | | | |
| MACMT/MACMI/12 | Gew.-% | | | | 66.85 | 47.65 | 37.95 | |
| PACM12 | Gew.-% | | | | | | | 95.65 |
| Hitzestabilisator | Gew.-% | 0.5 | 0.5 | 0.5 | 0.5 | 0.5 | 0.5 | 0.5 |
| Zinksulfid | Gew.-% | 3.85 | 3.85 | 3.85 | 3.85 | 3.85 | 3.85 | 3.85 |
| Glasfasern B | Gew.-% | 28.8 | 48.0 | 57.7 | 28.8 | 48.0 | 57.7 | |

(fortgesetzt)

| Anfärbeneigung | | | | | | | | |
|---|---|---|---|---|---|---|---|---|
| ΔL Senf | | -0.7 | -0.3 | -0.4 | -0.4 | -0.4 | -0.3 | |
| ΔL Lippenstift | | -1.5 | -0.7 | -1.1 | -0.9 | -0.9 | -1.1 | |
| ΔE Senf | | 3.0 | 3.3 | 3.5 | 3.0 | 3.5 | 3.9 | 6.0 |
| ΔE Lipgloss | | 2.8 | 2.8 | 2.9 | 2.8 | 2.6 | 3.2 | 1.4 |
| AN (Senf, Lipgloss) | | 2 | 2 | 2 | 2 | 2 | 2 | |
| **Mechanische Eigenschaften (trockener Zustand)** | | | | | | | | |
| Zug-E-Modul | MPa | 8600 | 15200 | 19800 | 9200 | 14500 | 19000 | 1430 |
| Reissfestigkeit | MPa | 166 | 187 | 188 | 171 | 183 | 180 | 50 |
| Reissdehnung | % | 3.4 | 1.9 | 1.4 | 3.0 | 1.9 | 1.3 | 130 |
| Schlagzähigkeit 23°C | kJ/m$^2$ | 61 | 43 | 33 | 60 | 42 | 26 | o.B. |
| Kerbschlagzähigkeit 23°C | kJ/m$^2$ | 10 | 10 | 9 | 8 | 9 | 8 | 13 |
| Linearer Spritzschwund längs | % | 0.15 | 0.05 | 0.02 | 0.13 | 0.04 | 0.02 | 0.54 |
| Linearer Spritzschwund quer | % | 0.45 | 0.30 | 0.22 | 0.42 | 0.26 | 0.20 | 0.65 |
| Verzug | % | 0.30 | 0.25 | 0.20 | 0.29 | 0.22 | 0.18 | 0.11 |
| o.B. = ohne Bruch; Verzug = \|Linearer Spritzschwund quer - Linearer Spritzschwund längs \| | | | | | | | | |

Tabelle 7: Zusammensetzung, Anfärbeneigung (AN), ΔL* und ΔE (bestimmt mit Anfärbemethode A) der Beispiele B14 bis B20

| | Einheit | **B14** | **B15** | **B16** | **B17** | **B18** | **B19** | **B20** |
|---|---|---|---|---|---|---|---|---|
| **Zusammensetzung** | | | | | | | | |
| MACMI/12 | Gew.-% | 53.45 | | | | | | |
| MACMT/MACMI/12 | Gew.-% | | 53.45 | | | | | |
| TMDC12 | Gew.-% | | | 53.45 | 96.15 | 66.85 | 75.65 | |
| MACM12/PACM12 | Gew.-% | | | | | | | 95.65 |
| 10T/612 (80:20) | Gew.-% | 13.4 | 13.4 | 13.4 | | | 20 | |
| Hitzestabilisator | Gew.-% | 0.5 | 0.5 | 0.5 | | 0.5 | 0.5 | 0.5 |
| Zinksulfid | Gew.-% | 3.85 | 3.85 | 3.85 | 3.85 | 3.85 | 3.85 | 3.85 |
| Glasfasern B | Gew.-% | 28.8 | 28.8 | 28.8 | | 28.8 | | |
| **Anfärbeneigung** | | | | | | | | |
| ΔL Senf | | +/-0.0 | -0.2 | -0.2 | -0.3 | -0.2 | +/-0.0 | |
| ΔL Lippenstift | | -0.7 | -0.6 | -0.6 | -0.4 | -0.5 | +/-0.0 | |
| ΔE Senf | | 3.3 | 2.6 | 3.3 | 1.5 | 2.9 | 3.0 | 5.8 |
| ΔE Lipgloss | | 2.5 | 1.8 | 1.8 | 0.89 | 1.9 | 0.7 | 1.3 |
| AN (Senf, Lipgloss) | | 2 | 2 | 2 | 1 | 2 | 2 | 2 |
| **Mechanische Eigenschaften (trockener Zustand)** | | | | | | | | |
| Zug-E-Modul | MPa | 8700 | 9000 | 7500 | 1600 | 7200 | 1800 | 1460 |

(fortgesetzt)

| Mechanische Eigenschaften (trockener Zustand) | | | | | | | | |
|---|---|---|---|---|---|---|---|---|
| Reissfestigkeit | MPa | 169 | 176 | 141 | 55 | 138 | 50 | 56 |
| Reissdehnung | % | 3.6 | 3.2 | 3.2 | 104 | 4.0 | 19 | 140 |
| Schlagzähigkeit 23°C | kJ/m$^2$ | 81 | 66 | 63 | o.B. | 67 | o.B. | o.B. |
| Kerbschlagzähigkeit 23°C | kJ/m$^2$ | 10 | 8 | 10 | 8 | 12 | 8 | 11 |
| Linearer Spritzschwund längs | % | 0.18 | 0.16 | 0.16 | 0.60 | 0.14 | 0.65 | 0.58 |
| Linearer Spritzschwund quer | % | 0.55 | 0.50 | 0.48 | 0.62 | 0.42 | 0.75 | 0.65 |
| Verzug | % | 0.37 | 0.34 | 0.32 | 0.02 | 0.28 | 0.10 | 0.07 |
| o.B. = ohne Bruch; Verzug = \|Linearer Spritzschwund quer - Linearer Spritzschwund längs \| | | | | | | | | |

Legende:

| | |
|---|---|
| 6T/6I (70:30) | Teilkristallines Polyamid auf Basis von TPS, IPS und HMDA, Tm = 325°C, $\eta_{rel}$ = 1.58, $\Delta$Hm = 55 J/g. |
| 6T/66 (60:40) | Teilkristallines Polyamid auf Basis von TPS, ADS und HMDA, Tm = 310°C, $\eta_{rel}$ = 1.60, $\Delta$Hm = 60 J/g |
| 10T/6T (85:15) | Teilkristallines Polyamid auf Basis von TPS, HMDA und DMDA, Tm = 300°C, $\eta_{rel}$ = 1.68, $\Delta$Hm = 58 J/g |
| 10T/612 (80:20) | Teilkristallines Polyamid auf Basis von TPS, DDDS, HMDA und DMDA, Tm = 256°C, $\eta_{rel}$ = 1.72, $\Delta$Hm = 48 J/g |
| PA 12 | Teilkristallines Polyamid auf Basis von LL, Tm = 178°C, $\eta_{rel}$ = 1.96, $\Delta$Hm = 57 J/g |
| MXD6 | Teilkristallines Polyamid auf Basis von MXDA und ADS, Tm = 240°C, $\eta_{rel}$ = 1.80, $\Delta$Hm = 44 J/g |
| MACM12 | Amorphes Polyamid auf Basis von MACM und DDDS, Tg = 156°C, $\eta_{rel}$ = 1.82, $\Delta$Hm < 4 J/g, LT = 93%. |
| MACM10 | Amorphes Polyamid auf Basis von MACM, DDS, Tg=165°C, $\eta_{rel}$ =1.75, $\Delta$Hm < 4 J/g, LT = 93%. |
| MACMI/12 (65:35) | Amorphes Polyamid auf Basis von MACM, IPS und LL, Tg = 154°C, $\eta_{rel}$ = 1.76, $\Delta$Hm < 4 J/g, LT =92% |
| MACMT/MACMI/12 (37:37: 26) | Amorphes Polyamid auf Basis von MACM, TPS, IPS und LL, Tg = 160°C, $\eta_{rel}$ = 1.70, $\Delta$Hm < 4 J/g, LT = 92%. |
| 6T/6I (33:67) | Amorphes Polyamid auf Basis von TPS, IPs und HMDA, Tg = 125°C, $\eta_{rel}$ = 1.54, $\Delta$Hm < 4 J/g. |
| TMDC12 | Amorphes Polyamid auf Basis von TMDC, DDDS, Tg=170°C, $\eta_{rel}$ =1.75, $\Delta$Hm < 4 J/g, LT = 92%. |
| PACM12 | Mikrokristallines Polyamid auf Basis von PACM und DDDS, Tm=251°C, Tg=140°C, $\eta_{rel}$ =1.91, $\Delta$Hm = 22 J/g, LT = 91%. |
| MACM12/PACM12 (30:70) | Mikrokristallines Polyamid auf Basis von MACM, PACM und DDDS, Tm=238°C, Tg=147°C, $\eta_{rel}$ =1.85, $\Delta$Hm = 12 J/g, LT = 91%. |
| Glasfaser A | Schnittglasfasern E10 Vetrotex 995 aus E-Glas, mit einer Länge von 4.5 mm und einem Durchmesser von 10 $\mu$m (kreisförmiger Querschnitt) von Owens Corning Fiberglas. |
| Glasfaser B | Schnittglasfasern Micromax 771 aus E-Glas, mit einer Länge von 4.5 mm und einem Durchmesser von 6 $\mu$m (kreisförmiger Querschnitt) von Owens Corning Fiberglas. |

(fortgesetzt)

| Glasfaser C | Schnittglasfasern CSG3PA-820 aus E-Glas, mit einer Länge von 3 mm und flachem Querschnitt von 7 x 28 $\mu$m von Nitto Boseki. |
| --- | --- |
| Zinksulfid | Sachtolith HD-S (Sachtleben), mittlere Partikelgrösse im Bereich von 0.30 bis 0.35 $\mu$m. |
| Titandioxid | Tabelle 4: Ti-Pure R-104 (DuPont), mittlere Partikelgrösse im Bereich von 0.22 $\mu$m; Tabelle 8: Ti-Pure R-103 Titandioxid (Rutil), DuPont, mittlere Partikelgrösse im Bereich von 0.22 $\mu$m. |
| Calciumcarbonat | Socal P3 (Solvay), mittlere Partikelgrösse im Bereich von 0.18 - 0.50 $\mu$m. |
| Russ | Black Pearls 880, Cabot. |

Verwendete Abkürzungen:

TPS=Terephthalsäure, IPS=Isophthalsäure, ADS=Adipinsäure, DDS=1,10-Decandisäure, DDDS=1,12-Dodecandisäure, HMDA=1,6-Hexandiamin, DMDA=1,10-Decandiamin, MXDA=m-Xylylendiamin, MACM=Bis-(4-amino-3-methyl-cyclohexyl)-methan, PACM=Bis-(4-amino-cyclohexyl)-methan, TMDC= Bis-(4-Amino-3,5-dimethylcyclohexyl)-methan, LL=Laurinlactam)

Die in Klammern angegebenen Verhältnisse stehen für Molverhältnisse der Untereinheiten, so bedeutet z.B. 10T/6T (85:15), dass 85 Mol-% 10T Einheiten neben 15 Mol-% 6T Einheiten vorliegen, und MACMT/MACMI/12 (37:37:26), dass 37 Mol-% MACMT Einheiten, 37 Mol-% MACMI Einheiten und 12 Mol-% Lactam 12 Einheiten (Laurinlactam) vorhanden sind.

Die Messungen wurden nach folgenden Normen und an folgenden Prüfkörpern durchgeführt.

Der **Zug-E-Modul** wurde nach ISO 527 mit einer Zuggeschwindigkeit von 1 mm/min, die Streckspannung, die **Reissfestigkeit** und die **Reissdehnung** wurden bestimmt gemäss ISO 527 mit einer Zuggeschwindigkeit von 50 mm/min (unverstärkte Varianten) oder einer Zuggeschwindigkeit von 5 mm/min (verstärkte Varianten) bei einer Temperatur von 23 °C, wobei als Probekörper ein ISO-Zugstab , Norm: ISO/CD 3167, Typ Al, 170 x 20/10 x 4 mm, verwendet wurde.

**Schlagzähigkeit** und **Kerbschlagzähigkeit** nach Charpy wurden nach ISO 179 am ISO-Prüfstab, Norm: ISO/CD 3167, Typ B1, 80 x 10 x 4 mm bei Temperatur 23 °C gemessen. Das **thermische Verhalten** (Schmelztemperatur (Tm), Schmelzenthalpie ($\Delta$Hm), Glasumwandlungstemperatur (Tg)) wurde anhand der ISO-Norm 11357 am Granulat bestimmt. Die Differential Scanning Calorimetry (DSC) wurde mit Aufheizrate von 20 °C/min durchgeführt. Für die Glasumwandlungstemperatur (Tg) wird die Temperatur für die Mittelstufe bzw. den Wendepunkt angegeben.

Die **relative Viskosität** ($\eta_{rel}$) wurde gemäss DIN EN ISO 307 anhand von 0,5 Gew.-%-igen m-Kresollösungen bei 20 °C gemessen. Als Probe wird Granulat verwendet.

**Die Verarbeitungsschwindung** (Linearer Spritzschwund längs/quer) wurde gemäss ISO 294-4 an einer Platte, Typ D2, 60 x 60 x 2 mm (gemäss Norm ISO 294-3) bestimmt. Die Platten wurden mit den Masse- und Werkzeugtemperaturen, wie sie in Tabelle 1 angegeben sind, hergestellt. Sie wurden vor der Messung 48 h bei Raumtemperatur über Silicagel gelagert. Die Verarbeitungsschwindung wurde längs und quer zur Fliessrichtung in Bezug auf die Formnestgrösse bestimmt. Angegeben wird der arithmetische Mittelwert aus den Messungen an 5 Platten.

Bestimmung der **Anfärbeneigung** bzw. der **Fleckbeständigkeit** (Stain Resistance) Auf Probenkörper der Dimension 2 x 40 x 50 mm(Farbplättchen) werden mit einem Baumwolltupfer die Anfärbemedien

- Lipgloss: Maybelline Color Sensational Cream Gloss Fabulous Pink 137 (Maybelline New York, Jade Düsseldorf, Gemey-Paris, 16 Place Vendome, 75001 Paris) oder
- Senf: Thomy scharfer Senf (Nestle Suisse AG, 1800 Vevey, Schweiz) flächig aufgetragen und einer 24 bzw. 72 stündigen Lagerung im Klimaschrank bei 65°C und einer relativen Feuchte von 90% unterworfen. In einigen Versuchen wird eine Mischung aus 1 Teil Anfärbemedium und 3 Teilen Rindertalg roh (Bovinum sebum crudum, Art. Nr. 26-6240-01, Charge 2010.11.0664, Hänseler AG, 9101 Herisau, Schweiz) auf die Farbplättchen aufgetragen. Folgende Anfärbemethoden wurden durchgeführt:

| Methode A: | Das Anfärbemedium wird zu 100% eingesetzt, d.h. es wird keine Verdünnung mit Sebum vorgenommen, und die Proben werden 72 Stunden bei 65°C und einer relativen Feuchte von 90% gelagert. |
| --- | --- |
| Methode B: | Das Anfärbemedium wird im Verhältnis von 1:3 mit Sebum gemischt, d.h. die Konzentration des Anfärbemediums in dieser |

(fortgesetzt)

Methode C: Das Anfärbemedium wird im Verhältnis von 1:3 mit Sebum gemischt, d.h. die Konzentration des Anfärbemediums in dieser

Mischung beträgt 25 Gew.-%, und die Proben werden 24 Stunden bei 65°C und einer relativen Feuchte von 90% gelagert.

Nach beendeter Lagerung werden die Farbplättchen auf 23°C temperiert und dann unter fliessendem, handwarmem Wasser mit einem mit wässriger Seifenlösung versehenen Schwämmchen oberflächlich gereinigt, bis die Probenoberfläche frei ist von anhaftenden Rückständen des Anfärbemediums. Die Referenz-Farbplättchen ohne Anfärbemedien werden ebenfalls der Lagerung und dem Reinigungsschritt unterworfen.

Nach Reinigung werden die CIE L*a*b*-Werte von Referenz- und Test-Farbplättchen mit einem Spectrophotometer der Firma Datacolor (Gerätebezeichnung: Datacolor 650) unter den folgenden Messbedingungen vor einem weisslackierten Kontrastblech bestimmt; Messmodus: Reflexion, Messgeometrie: D/8°, Lichtart: D 65 10, Glanz: eingeschlossen, Kalibrierung: UV-kalibriert, Messblende: SAV.

Bei Verwendung der L*, a*, und b*-Werte von Referenz und Probe entsprechend dem CIELAB Systems (DIN 6174) berechnet sich die Farbhelligkeitsdifferenz ΔL* wie folgt:

$$\Delta L^* = L^*_{Probe} - L^*_{Referenz}$$

Der Farbabstand ΔE zwischen den Farborten (L*a*b*)Referenz und (L*a*b*)Probe wird gemäss ISO 12647 und ISO 13655 als euklidischer Abstand wie folgt berechnet:

$$\Delta E = \sqrt{(L^*_{Probe} - L^*_{Referenz})^2 + (a^*_{Probe} - a^*_{Referenz})^2 + (b^*_{Probe} - b^*_{Referenz})^2}$$

Die Anfärbeneigung (AN) im beschriebenen Anfärbetest wird durch die Änderung des Farbeindrucks ΔE quantifiziert; sie kann wie folgt klassifiziert werden:

AN=1: Keine oder nur sehr geringe Anfärbung ($0 \leq \Delta E \leq 2$)
AN=2: Geringe Anfärbung ($2 < \Delta E \leq 6$)
AN=3: Deutliche Anfärbung ($6 < \Delta E \leq 12$)
AN=4: Starke Anfärbung (entspricht einem $\Delta E > 12$)

Erfindungsgemässe Artikel (Formteile, Bauteile) haben eine Anfärbeneigung der Klasse 1 oder 2, d.h. der ΔE-Wert liegt bei maximal 6.

Die für die Farbmessung verwendeten Farbplättchen der Dimension 2 x 40 x 50 mm wurden aus diesen Materialien auf einer vollelektrischen Spritzgussmaschine der Firma Arburg (Gerätebezeichnung: ARBURG Allrounder 320 A 500-170) mit temperiertem Werkzeug gespritzt. Die Spritzgussparameter sind in Tabelle 1 aufgeführt. **Lichttransmission** (LT, Transparenz) und Haze wurden nach ASTM D 1003 an Platten der Dimension 2 x 60 x 60mm oder an Rundplatten 2 x 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

**Patentansprüche**

1. Verwendung einer Polyamidformmasse bestehend aus:

(A) wenigstens 30 Gew.-% eines Polyamids oder einer Polyamidmischung, bestehend aus:

(A1) 50 - 100 Gew.-% mindestens eines amorphen und/oder mikrokristallinen Polyamids mit einer Glasübergangstemperatur von wenigstens 100°C, gemessen nach ISO-Norm 11357 am Granulat mit Differential Scanning Calorimetry mit einer Aufheizrate von 20 °C/min, wobei amorphe Polyamide des Polyamids (A1) Schmelzwärmen von höchstens 4 J/g, und mikrokristalline Polyamide des Polyamids (A1) Schmelzwärmen im Bereich von 4 - 25 J/g aufweisen, jeweils bestimmt gemäss ISO 11357 an Granulat, Differential Scanning Calorimetry (DSC) mit einer Aufheizrate von 20 °C/min, basierend auf:

(a1) 20 - 100 Mol-% wenigstens eines cycloaliphatischen Diamins; und

0 - 80 Mol-% wenigstens eines anderen aliphatischen und/oder aromatischen Diamins; wobei sich die Mol-% innerhalb der Komponente (a1) auf 100 Mol-% ergänzen, sowie

(a2) aromatischen und/oder aliphatischen Dicarbonsäuren mit mindestens 6 Kohlenstoffatomen,

mit der Massgabe, dass bis zu 45 Mol-% der Gesamtheit der Monomere der Komponenten (a1) und (a2) ersetzt sein können durch Lactame mit 6 bis 12 Kohlenstoffatomen oder Aminocarbonsäuren mit 6 bis 12 Kohlenstoffatomen;
(A2) 0 - 50 Gew.-% mindestens eines von (A1) verschiedenen, teilaromatischen Polyamids;

wobei sich (A1) und (A2) auf 100% Komponente (A) ergänzen;
(F) 0.01 - 10 Gew.-% eines anorganischen Weisspigments ausgewählt als Zinksulfid;
(B) 0 - 70 Gew.-% faserförmige (B1) und/oder partikuläre (B2) Zuschlagstoffe, unter Ausschluss von anorganischen Weisspigmenten;
(D) 0 - 25 Gew.-% eines Flammschutzmittels
(E) 0 - 3 Gew.-% Additive;
wobei die Summe der Bestandteile (A) - (F) 100 Gew.-% ausmacht,
zur Herstellung eines anfärberesistenten Artikels, bei welchem die Anfärbeneigung (AN), wie beschrieben in der Beschreibung unter Verwendung der Methode A bestimmt, 1 oder 2 ist.

2. Verwendung einer Polyamidformmasse nach Anspruch 1, **dadurch gekennzeichnet,**

**dass** der Anteil des anorganischen Weisspigments der Komponente (F) 0.5 - 10 Gew.-%, vorzugsweise 2 - 7 Gew.-% ausmacht,
wobei das anorganische Weisspigment bevorzugtermassen über eine mittlere Partikelgrösse (D50) im Bereich von 0.1-40 $\mu$m, bevorzugt im Bereich von 0.1-20 $\mu$m, insbesondere im Bereich von 0.1-10 $\mu$m verfügt.

3. Verwendung einer Polyamidformmasse nach Anspruch 1, **dadurch gekennzeichnet,**

**dass** das Polyamid der Komponente (A1) eine Glasübergangstemperatur von wenigstens 130°C, vorzugsweise wenigstens 140°C, insbesondere vorzugsweise wenigstens 150°C aufweist, wobei das Polyamid der Komponente (A1) weiterhin bevorzugtermassen eine Glasübergangstemperatur von nicht mehr als 220°C, insbesondere von nicht mehr als 200°C aufweist,
oder dass amorphe Polyamide des Polyamids (A1) Schmelzwärmen von höchstens 2 J/g, bestimmt gemäss ISO 11357 an Granulat, unter Verwendung von Differential Scanning Calorimetry (DSC) mit einer Aufheizrate von 20 °C/min, aufweisen,
oder dass mikrokristalline Polyamide der Komponente (A1) Schmelzwärmen im Bereich von 8 - 22 J/g, bestimmt gemäss ISO 11357 an Granulat, Differential Scanning Calorimetry (DSC) mit einer Aufheizrate von 20 °C/min, aufweisen.

4. Verwendung einer Polyamidformmasse nach einem der vorhergehenden Ansprüche, **dadurch gekennzeichnet,**
**dass** der gemäss EN ISO 11664-4 im CIELAB-Farbraum bestimmte E-Wert (Farbort) wird durch einen Anfärbetest um einen $\Delta$E-Wert von höchstens 6, bevorzugt höchstens 5, insbesondere bevorzugt höchstens 4 verändert wird oder dass die Artikel sowohl vor als auch nach der Anfärbung eine Luminanz L* von bevorzugtermassen > 80, vorzugsweise > 90, insbesondere vorzugsweise > 95 aufweisen, wobei bevorzugtermassen alternativ oder zusätzlich der Betrag von a* respektive unabhängig davon Betrag von b* jeweils < 10, vorzugsweise < 5, insbesondere vorzugsweise < 3 ganz besonders bevorzugt im Bereich von 0 ist.

5. Verwendung einer Polyamidformmasse nach einem der vorhergehenden Ansprüche, **dadurch gekennzeichnet,**

**dass** innerhalb der Komponente (A1) der Anteil an (a1) aufgebaut ist aus 40-100 Mol-% wenigstens eines cycloaliphatischen Diamins; und 0-60 Mol-% wenigstens eines anderen aliphatischen und/oder aromatischen Diamins, vorzugsweise aus 50-100 Mol-% oder 60-100 Mol-% wenigstens eines cycloaliphatischen Diamins; und 0-50 Mol-% respektive 0-40 Mol-% wenigstens eines anderen aliphatischen und/oder aromatischen Diamins, wobei insbesondere bevorzugt (a1) nur aus cycloaliphatischen Diaminen aufgebaut ist,
oder dass es sich innerhalb des Anteils (a1) beim anderen aliphatischen und/oder aromatischen Diamin um eines ausgewählt aus der Gruppe: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin oder Mischungen davon handelt, wobei geradkettige aliphatische Diamine mit 6 -10 Kohlenstoffatomen bevorzugt sind, insbesondere 1,6-Hexandiamin.

6. Verwendung einer Polyamidformmasse nach einem der vorhergehenden Ansprüche, **dadurch gekennzeichnet, dass** das wenigstens eine cycloaliphatische Diamin (a1) der Komponente (A1) 6 bis 24 Kohlenstoffatomen aufweist, und insbesondere ausgewählt ist aus der folgenden Gruppe: Bis-(aminocyclohexyl)methan, Bis-(aminocyclohexyl)propan, Norbornandiamin, Bis-(aminomethyl)-norbornan, Diaminocyclohexan, Isophorondiamin, Diaminodicyclohexylpropan, jeweils alkylsubstituierter oder unsubstituierter Form, sowie Mischungen davon wobei als Alkylsubstituenten lineare und/oder verzweigte C1-C6, bevorzugt C1-C4 Alkylgruppen bevorzugt sind, insbesondere Methyl-, Ethyl-, Propyl-, Isopropyl- oder Butyl-Gruppen bevorzugt sind, insbesondere Methylgruppen.

7. Verwendung einer Polyamidformmasse nach einem der vorhergehenden Ansprüche, **dadurch gekennzeichnet, dass** das wenigstens eine cycloaliphatische Diamin innerhalb von (a1) der Komponente (A1) ausgewählt ist aus der folgenden Gruppe: Bis-(4-amino-3-methyl-cyclohexyl)-methan (MACM), Bis-(4-aminocyclohexyl)-methan (PACM), Bis-(4-Amino-3-ethyl-cyclohexyl)-methan (EACM), Bis-(4-Amino-3,5-dimethyl-cyclohexyl)-methan (TMDC), 2,2-(4,4'-Diaminodicyclohexyl)propan (PACP) oder Mischungen davon, wobei insbesondere bevorzugt Bis-(4-amino-3-methyl-cyclohexyl)-methan (MACM), Bis-(4-Amino-3,5-dimethyl-cyclohexyl)-methan (TMDC), Bis-(4-aminocyclohexyl)-methan (PACM) oder Mischungen davon eingesetzt sind, wobei weiterhin vorzugsweise innerhalb der Komponente (A1) nicht mehr als 10 Mol-%, vorzugsweise nicht mehr als 5 Mol-%, dieser Diamine ersetzt sind durch andere aliphatische und/oder aromatische Diamine, und wobei insbesondere vorzugsweise die Komponente (A1) frei ist von solchen weiteren anderen, nichtcycloaliphatischen Diaminen.

8. Verwendung einer Polyamidformmasse nach einem der vorhergehenden Ansprüche, **dadurch gekennzeichnet, dass** die wenigstens eine aromatische und/oder aliphatische Dicarbonsäure mit mindestens 6 Kohlenstoffatomen (a2) der Komponente (A1) ausgewählt ist aus der folgenden Gruppe: geradkettige unverzweigte aliphatische Dicarbonsäuren, aromatische Dicarbonsäuren wie insbesondere Isophthalsäure, Terephthalsäure, Naphthalindicarbonsäure, sowie Mischungen davon, wobei vorzugsweise die aromatische und/oder aliphatische Dicarbonsäure mit mindestens 6 Kohlenstoffatomen (a2) der Komponente (A1) ausgewählt ist aus der folgenden Gruppe: Isophthalsäure allein, Mischung aus Isophthalsäure und Terephthalsäure, vorzugsweise in einem Molverhältnis von 40/60 bis 60/40, oder aliphatische unverzweigte C10-C14 Dicarbonsäure, vorzugsweise 1,10-Decandicarbonsäure, 1,12-Dodecandicarbonsäure.

9. Verwendung einer Polyamidformmasse nach einem der vorhergehenden Ansprüche, **dadurch gekennzeichnet,**

   **dass** die Komponente (A1) frei von Terephthalsäure und/oder Isophthalsäure ist, und weiterhin vorzugsweise der Anteil an Lactam und/oder Aminocarbonsäure im Wesentlichen null ist,
   oder dass, wenn Komponente (A1) Terephthalsäure und/oder Isophthalsäure im Rahmen von (a2) enthält, oder wenn (a2) durch Terephthalsäure und/oder Isophthalsäure gebildet wird, 10-40 Mol-%, vorzugsweise 20-35 Mol-% der Gesamtheit der Monomere der Komponenten (a1) und (a2) ersetzt sind durch Lactame mit 6 bis 12 Kohlenstoffatomen, insbesondere mit 10 oder 12 Kohlenstoffatomen oder Aminocarbonsäuren mit 6 bis 12 Kohlenstoffatomen, insbesondere $\alpha,\omega$-Aminosäuren und insbesondere solchen mit 10 oder 12 Kohlenstoffatomen.

10. Verwendung einer Polyamidformmasse nach einem der vorhergehenden Ansprüche, **dadurch gekennzeichnet, dass** der Anteil an Terephthalsäure innerhalb von Komponente (A1) höchstens 50 mol-%, bezogen auf die Summe aller Dicarbonsäuren von Komponente (A1), beträgt, wobei bevorzugt ist, wenn der Anteil der Terephthalsäure in Komponente (A1) kleiner 45 mol-% ist oder keine Terephthalsäure in Komponenten (A1) enthalten ist,

11. Verwendung einer Polyamidformmasse nach einem der vorhergehenden Ansprüche, **dadurch gekennzeichnet, dass** die Komponente (A1) gebildet wird durch ein System der Gruppe ausgewählt aus: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 oder Mischungen oder Copolyamide auf Basis dieser Systeme, oder dass die Komponente (A1) gebildet wird durch ein System der Gruppe ausgewählt aus: MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI oder PACMT/6, IPDT/6 oder Mischungen daraus, MACM9-18/PACM9-18, insbesondere MACM10/PACM10, MACM12/PACM12 und MACM14/PACM14 und Mischungen davon.

**12.** Verwendung einer Polyamidformmasse nach einem der vorhergehenden Ansprüche, **dadurch gekennzeichnet,**

**dass** die Komponente (A2) aufgebaut ist aus

Dicarbonsäuren, namentlich aromatischen Dicarbonsäuren, bevorzugt ausgewählt aus der Gruppe: Terephthalsäure, Naphthalindicarbonsäure und Isophthalsäure sowie Mischungen davon, und/oder aus Dicarbonsäuren ausgewählt aus der Gruppe: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, cis- und/oder trans-Cyclohexan-1,4-dicarbonsäure und/oder cis- und/oder trans-Cyolohexan-1,3-dicarbonsäure (CHDA) und Gemischen daraus, wobei Adipinsäure, Isophthalsäure, Sebazinsäure und Dodecandisäure bevorzugt sind, und wobei der Anteil der Terephthalsäure an der Gesamtmenge an Dicarbonsäuren von Komponente (A2) vorzugsweise im Bereich von 50 bis 100 mol-%, bevorzugt im Bereich von 60 bis 95 mol-% und besonders bevorzugt im Bereich von 65 bis 90 mol-% liegt, sowie aus

Diaminen, namentlich ausgewählt aus der folgenden Gruppe: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,1 1-Undecandiamin, 1,12-Dodecandiamin, 1,13-Tridecandiamin, 1,14-Tetradecandiamin, m-Xylylendiamin und p-Xylylendiamin, wobei 1,6-Hexandiamin, 1,10-Decandiamin und 1,12-Dodecandiamin bevorzugt werden,

wobei die Polyamide (A2) auch Lactame oder Aminocarbonsäuren, insbesondere $\alpha,\omega$-Aminosäuren oder Lactame mit 6 bis 12 Kohlenstoffatome enthalten können, bevorzugt ausgewählt aus der folgenden Gruppe: m-Aminobenzoesäure, p-Aminobenzoesäure, Caprolactam (CL), $\alpha,\omega$-Aminocapronsäure, $\alpha,\omega$-Aminoheptansäure, $\alpha,\omega$-Aminooctansäure, $\alpha,\omega$-Aminononansäure, $\alpha,\omega$-Aminodecansäure, $\alpha,\omega$-Aminoundecansäure (AUA), Laurinlactam (LL) und $\alpha,\omega$-Aminododecansäure (ADA), wobei besonders bevorzugt sind Caprolactam, $\alpha,\omega$-Aminocapronsäure, Laurinlactam, $\alpha,\omega$-Aminoundecansäure und $\alpha,\omega$-Aminododecansäure.

**13.** Verwendung einer Polyamidformmasse nach einem der vorhergehenden Ansprüche, **dadurch gekennzeichnet, dass** die Komponente (A) aus einem oder mehreren Polyamiden (A1) besteht, oder dass die Komponente (A) aus einer Mischung aus einem oder mehreren Polyamiden (A1) mit teilaromatischen Polyamiden (A2) besteht, wobei die Komponente (A2) in dieser Mischung höchstens 50 Gew.-%, bevorzugt höchstens 40 Gew.-% und besonders bevorzugt höchstens 35 Gew.-%, bezogen auf die Polyamidmischung A, ausmacht.

**14.** Verwendung einer Polyamidformmasse nach einem der vorhergehenden Ansprüche, **dadurch gekennzeichnet,**

**dass** die Komponente (A1) gebildet wird durch ein System ausgewählt aus der Gruppe: MACM12, MACMI/12, TMDC12, MACMT/MACMI/12 oder einer Mischung davon;
und dabei bevorzugtermassen gleichzeitig (A2) ausgewählt ist als 6T/6I, wobei das Mol-Verhältnis im Bereich von 60:40 bis 80:20 liegt oder insbesondere im Bereich von 65:35 bis 75:25 beträgt, wobei das Verhältnis 70:30 besonders bevorzugt ist.
oder dabei bevorzugtermassen gleichzeitig (A2) ausgewählt ist als 10T/6T, 12T/6T, 10T/11, 10T/12, 10T/1010, 10T/1012, 10T/106, 10T/126, und/oder 10T/612 und/oder als Polyamid gebildet aus 2,2,4-Trimethylhexandiamin oder 2,4,4 Trimethylhexandiamin und Terephthalsäure, wobei das Mol-Verhältnis im Bereich von 60:40 bis 95:5 liegt oder insbesondere im Bereich von 70:30 bis 90:10 beträgt,
wobei vorzugsweise der Anteil (A1) 50 - 95 Gew.-%, bevorzugt 60 - 90 Gew.-%, besonders bevorzugt 70 - 90 Gew.-% bezogen auf die Mischung (A) ausmacht.

**15.** Verwendung einer Polyamidformmasse nach einem der vorhergehenden Ansprüche als Teil eines elektrischen oder elektronischen Bauteils, eines Gehäuses oder eines Gehäusebestandteils, insbesondere Gehäuse oder Gehäuseteile für tragbare elektronische Geräte, Haushaltsgeräte, Haushaltsmaschinen, Geräte und Apparate für die Telekommunikation und Unterhaltungselektronik, Innen und Außenteile im Automobilsektor und im Bereich von anderen Transportmitteln, Innen und Außenteile, vorzugsweise mit tragender oder mechanischer Funktion im Bereich Elektro, Möbel, Sport, Maschinenbau, Sanitär und Hygiene, Medizin, Energie- und Antriebstechnik, insbesondere bevorzugt Mobiltelefone, Smartphones, Organizer, Laptop Computer, Notebook Computer, Tablet Computer, Radios, Kameras, Uhren, Rechner, Abspielgeräte für Musik oder Video, Navigationsgeräte, GPS Geräte, elektronische Bilderrahmen, externe Festplatten und andere elektronische Speichermedien, oder zur Herstellung von Garnen, Fasern, Bikomponentenfasern, Stapelfasern, bevorzugt gekräuselt und/oder texturiert und/oder geschnitten auf eine Länge von 30 - 140 mm, Filamenten und Monofilen.

**16.** Anfärberesistanter Artikel basierend auf einer Polyamidformmasse bestehend aus:

(A) wenigstens 30 Gew.-% eines Polyamids oder einer Polyamidmischung, bestehend aus:

(A1) 50 - 100 Gew.-% mindestens eines amorphen und/oder mikrokristallinen Polyamids mit einer Glasübergangstemperatur von wenigstens 100°C, gemessen nach ISO-Norm 11357 am Granulat mit Differential Scanning Calorimetry mit einer Aufheizrate von 20 °C/min, wobei amorphe Polyamide des Polyamids (A1) Schmelzwärmen von höchstens 4 J/g, und mikrokristalline Polyamide des Polyamids (A1) Schmelzwärmen im Bereich von 4 - 25 J/g aufweisen, jeweils bestimmt gemäss ISO 11357 an Granulat, Differential Scanning Calorimetry (DSC) mit einer Aufheizrate von 20 °C/min, basierend auf:

(a1) 20 - 100 Mol-% wenigstens eines cycloaliphatischen Diamins; und

0 - 80 Mol-% wenigstens eines anderen aliphatischen und/oder aromatischen Diamins; wobei sich die Mol-% innerhalb der Komponente (a1) auf 100 Mol-% ergänzen, sowie

(a2) aromatischen und/oder aliphatischen Dicarbonsäuren mit mindestens 6 Kohlenstoffatomen,

mit der Massgabe, dass bis zu 45 Mol-% der Gesamtheit der Monomere der Komponenten (a1) und (a2) ersetzt sein können durch Lactame mit 6 bis 12 Kohlenstoffatomen oder Aminocarbonsäuren mit 6 bis 12 Kohlenstoffatomen;
(A2) 0 - 50 Gew.-% mindestens eines von (A1) verschiedenen, teilaromatischen Polyamids;

wobei sich (A1) und (A2) auf 100% Komponente (A) ergänzen;
(F) 0.01 - 10 Gew.-% eines anorganischen Weisspigments ausgewählt als Zinksulfid;
(B) 0 - 70 Gew.-% faserförmige (B1) und/oder partikuläre (B2) Zuschlagstoffe, unter Ausschluss von anorganischen Weisspigmenten;
(D) 0 - 25 Gew.-% eines Flammschutzmittels
(E) 0 - 3 Gew.-% Additive;
wobei die Summe der Bestandteile (A) - (F) 100 Gew.-% ausmacht,
wobei der anfärberesistente Artikel eine Anfärbeneigung (AN), wie beschrieben in der Beschreibung unter Verwendung der Methode A bestimmt, von 1 oder 2 ausfweist.

**Claims**

**1.** Use of a polyamide molding compound consisting of:

(A) at least 30% by weight of a polyamide or polyamide blend consisting of:

(A1) 50 - 100 wt.- % by weight of at least one amorphous and/or microcrystalline polyamide having a glass transition temperature of at least 100°C, measured according to ISO standard 11357 on the granules using differential scanning calorimetry at a heating rate of 20°C/min, amorphous polyamides of the polyamide (A1) having melt heat of at most 4 J/g, and microcrystalline polyamides of polyamide (A1) have heat of fusion in the range of 4 - 25 J/g, each determined according to ISO 11357 on granules, Differential Scanning Calorimetry (DSC) with a heating rate of 20 °C/min, based on:

(a1) 20 - 100 mol% of at least one cycloaliphatic diamine; and
0 - 80 mol-% of at least one other aliphatic and/or aromatic diamine;
the mole % within component (a1) adding up to 100 mole %, and
(a2) aromatic and/or aliphatic dicarboxylic acids having at least 6 carbon atoms,

with the proviso that up to 45 mol% of the total monomers of components (a1) and (a2) may be replaced by lactams having 6 to 12 carbon atoms or aminocarboxylic acids having 6 to 12 carbon atoms;

(A2) 0-50% by weight of at least one partially aromatic polyamide different from (A1);
wherein (A1) and (A2) complement each other to 100% component (A);

(F) 0.01 - 10% by weight of an inorganic white pigment selected as zinc sulfide;
(B) 0 - 70% by weight of fibrous (B1) and/or particulate (B2) aggregates, excluding inorganic white pigments;
(D) 0 - 25 % by weight of a flame retardant
(E) 0 - 3 weight % additives;
wherein the sum of the components (A) - (F) is 100% by weight,
for the manufacture of a stain-resistant article in which the staining tendency (AN), as determined in the description using method A, is 1 or 2.

2. Use of a polyamide moulding composition according to claim 1, **characterized in that** the proportion of the inorganic white pigment of component (F) is 0.5 - 10% by weight, preferably 2 - 7% by weight,
wherein the inorganic white pigment preferably has a mean particle size (D50) in the range of 0.1-40 $\mu$m, preferably in the range of 0.1-20 $\mu$m, especially in the range of 0.1-10 $\mu$m.

3. Use of a polyamide molding composition according to claim 1, **characterized in that** the polyamide of component (A1) has a glass transition temperature of at least 130°C, preferably at least 140°C, in particular preferably at least 150°C, the polyamide of component (A1) further preferably having a glass transition temperature of not more than 220°C, in particular of not more than 200°C,

or that amorphous polyamides of the polyamide (A1) have heat of fusion of not more than 2 J/g, determined according to ISO 11357 on granules, using differential scanning calorimetry (DSC) with a heating rate of 20 °C/min,
or that microcrystalline polyamides of component (A1) have heat of fusion in the range of 8 - 22 J/g, determined according to ISO 11357 on granules, Differential Scanning Calorimetry (DSC) with a heating rate of 20 °C/min.

4. Use of a polyamide moulding compound according to one of the preceding claims, **characterised in that** the E-value (chromaticity coordinates) determined in the CIELAB color space according to EN ISO 11664-4 is changed by a staining test by a $\Delta$E value of at most 6, preferably at most 5, in particular preferably at most 4
or that the articles have a luminance L* of preferably > 80, preferably > 90, in particular preferably > 95, both before and after dyeing, whereby, alternatively or additionally, the amount of a* or, independently thereof, the amount of b* is < 10, preferably < 5, in particular preferably < 3, particularly preferably in the range of 0.

5. Use of a polyamide moulding composition according to one of the preceding claims, **characterised**

**in that** within component (A1) the proportion of (a1) is composed of 40-100 mol% of at least one cycloaliphatic diamine; and 0-60 mol% of at least one other aliphatic and/or aromatic diamine, preferably of 50-100 mol% or 60-100 mol% of at least one cycloaliphatic diamine; and 0-50 mol% and 0-40 mol% respectively of at least one other aliphatic and/or aromatic diamine, in particular preferably (a1) being composed only of cycloaliphatic diamines,
or that within the portion (a1) the other aliphatic and/or aromatic diamine is one selected from the group consisting of: 1,4-butanediamine, 1,5-pentanediamine, 2-methyl-1,5-pentanediamine, 2-butyl-2-ethyl-1,5-pentanediamine, 1,6-hexanediamine, 2,2,4-trimethylhexamethylene diamine, 2,4,4-trimethylhexamethylene diamine, 1,8-octanediamine, 2-methyl-1,8-octanediamine, 1,9-nonanediamine, 1,10-decanediamine, 1, 11-undecanediamine, 1,12-dodecanediamine, 1,13-tridecanediamine, 1,14-tetradecanediamine, m-xylylenediamine and p-xylylenediamine or mixtures thereof, straight-chain aliphatic diamines having 6-10 carbon atoms being preferred, in particular 1,6-hexanediamine.

6. Use of a polyamide moulding composition according to one of the preceding claims, **characterised in that** the at least one cycloaliphatic diamine (a1) of component (A1) has 6 to 24 carbon atoms, and in particular is selected from the following group: bis-(aminocyclohexyl)methane, bis-(aminocyclohexyl)propane, norbornanediamine, bis-(aminomethyl)-norbomane, diaminocyclohexane, isophoronediamine, diaminodicyclohexylpropane, each in alkyl-substituted or unsubstituted form, and mixtures thereof, wherein linear and/or branched C1-C6, preferably C1-C4 alkyl groups are preferred as alkyl substituents, in particular methyl, ethyl, propyl, isopropyl or butyl groups are preferred, in particular methyl groups.

7. Use of a polyamide moulding composition according to one of the preceding claims, **characterised in that** the at least one cycloaliphatic diamine within (a1) of component (A1) is selected from the following group: bis-(4-amino-3-methylcyclohexyl)-methane (MACM), bis-(4-amino-cyclohexyl)-methane (PACM), bis-(4-amino-3-ethyl-cyclohexyl)-methane (EACM), bis-(4-amino-3,5-dimethylcyclohexyl)-methane (TMDC), 2, 2-(4,4'-diaminodicyclohexyl)propane (PACP) or mixtures thereof, in particular preferably bis-(4-amino-3-methyl-cyclohexyl)-methane (MACM), bis-(4-amino-3,5-dimethyl-cyclohexyl)-methane (TMDC), bis-(4-amino-cyclohexyl)-methane (PACM) or mixtures thereof are used, wherein furthermore preferably within component (A1) no more than 10 mol%, preferably no more than 5 mol%, of these diamines are replaced by other aliphatic and/or aromatic diamines, and wherein in particular preferably component (A1) is free of such other, non-cycloaliphatic diamines.

8.  Use of a polyamide moulding composition according to one of the preceding claims, **characterized in that** the at least one aromatic and/or aliphatic dicarboxylic acid having at least 6 carbon atoms (a2) of component (A1) is selected from the following group: straight-chain unbranched aliphatic dicarboxylic acids, aromatic dicarboxylic acids such as in particular isophthalic acid, terephthalic acid, naphthalene dicarboxylic acid, and mixtures thereof, preferably the aromatic and/or aliphatic dicarboxylic acid having at least 6 carbon atoms (a2) of component (A1) being selected from the following group: isophthalic acid alone, mixture of isophthalic acid and terephthalic acid, preferably in a molar ratio of 40/60 to 60/40, or aliphatic unbranched C10-C14 dicarboxylic acid, preferably 1,10-decane dicarboxylic acid, 1,12-dodecane dicarboxylic acid.

9.  Use of a polyamide moulding composition according to one of the preceding claims, **characterised**

    **in that** component (A1) is free of terephthalic acid and/or isophthalic acid, and furthermore preferably the proportion of lactam and/or aminocarboxylic acid is substantially zero,
    or that, if component (A1) contains terephthalic acid and/or isophthalic acid within the scope of (a2), or if (a2) is formed by terephthalic acid and/or isophthalic acid, 10-40% by mol, preferably 20-35% by mol, of the total monomers of components (a1) and (a2) are replaced by lactams having 6 to 12 carbon atoms, in particular having 10 or 12 carbon atoms, or aminocarboxylic acids having 6 to 12 carbon atoms, in particular $\alpha,\omega$ amino acids and in particular those having 10 or 12 carbon atoms.

10. Use of a polyamide moulding composition according to one of the preceding claims, **characterized in that** the proportion of terephthalic acid within component (A1) is at most 50 mol%, based on the sum of all dicarboxylic acids of component (A1), with preference being given if the proportion of terephthalic acid in component (A1) is less than 45 mol% or no terephthalic acid is present in component (A1).

11. Use of a polyamide moulding composition according to any of the preceding claims, **characterised in that** the component (A1) is formed by a system of the group selected from: MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 or mixtures or copolyamides based on these systems, or that the component (A1) is formed by a system of the group selected from: MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACM36, 12/PACMI or PACMT/6, IPDT/6 or mixtures thereof, MACM9-18/PACM9-18, especially MACM10/PACM10, MACM12/PACM12 and MACM14/PACM14 and mixtures thereof.

12. Use of a polyamide moulding composition according to one of the preceding claims, characterised

    that the component (A2) is composed of
    dicarboxylic acids, namely aromatic dicarboxylic acids, preferably selected from the group: terephthalic acid, naphthalene dicarboxylic acid and isophthalic acid and mixtures thereof, and/or from dicarboxylic acids selected from the group Adipic acid, cork acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, C36-dimer fatty acid, cis- and/or trans-cyclohexane-1,4-dicarboxylic acid and/or cis- and/or trans-cyolohexane-1,3-dicarboxylic acid (CHDA) and mixtures thereof, where adipic acid, isophthalic acid, sebacic acid and dodecanedioic acid are preferred, and where the proportion of terephthalic acid in the total amount of dicarboxylic acids of component (A2) is preferably in the range from 50 to 100 mol%, preferably in the range from 60 to 95 mol%, and particularly preferably in the range from 65 to 90 mol%, and
    Diamines, namely selected from the following group: 1,4-butanediamine, 1,5-pentanediamine, 2-methyl-1,5-pentanediamine, 2-butyl-2-ethyl-1,5-pentanediamine, 1,6-hexanediamine, 2,2,4-trimethylhexamethylene diamine, 2,4,4-trimethylhexamethylene diamine, 1,8-octanediamine, 2-methyl-1,8-octanediamine, 1, 9-nonanediamine, 1,10-decanediamine, 1,11-undecanediamine, 1,12-dodecanediamine, 1,13-tridecanediamine, 1,14-tetradecanediamine, m-xylylenediamine and p-xylylenediamine, wherein 1,6-hexanediamine, 1,10-decanediamine and 1,12-dodecanediamine are preferred,

wherein the polyamides (A2) may also contain lactams or aminocarboxylic acids, in particular $\alpha,\omega$ amino acids or lactams with 6 to 12 carbon atoms, preferably selected from the following group: m-Aminobenzoic acid, p-Aminobenzoic acid, caprolactam (CL), $\alpha,\omega$-Aminocaproic acid, $\alpha,\omega$-Aminoheptanoic acid, $\alpha,\omega$-Aminooctanoic acid, $\alpha,\omega$-Aminononanoic acid, $\alpha,\omega$-Aminodecanoic acid, $\alpha,\omega$-Aminoundecanoic acid (AUA) Laurinlactam (LL) and $\alpha,\omega$-Aminododecanoic acid (ADA), whereby caprolactam, $\alpha,\omega$-Aminocaproic acid, laurinlactam, $\alpha,\omega$-Aminoundecanoic acid and $\alpha,\omega$-Aminododecanoic acid are particularly preferred.

13. Use of a polyamide moulding composition according to one of the preceding claims, **characterised in**

**that** component (A) consists of one or more polyamides (A1),
or in that component (A) consists of a mixture of one or more polyamides (A1) with partially aromatic polyamides (A2), component (A2) in this mixture making up at most 50% by weight, preferably at most 40% by weight and particularly preferably at most 35% by weight, based on the polyamide mixture A.

14. Use of a polyamide moulding composition according to one of the preceding claims, characterised

that the component (A1) is formed by a system selected from the group: MACM12, MACMI/12, TMDC12, MACMT/MACMI/12 or a mixture thereof;
and more preferably simultaneously (A2) is selected as 6T/6I, the molar ratio being in the range of 60:40 to 80:20 or more particularly in the range of 65:35 to 75:25, the ratio 70:30 being particularly preferred.
or more preferably simultaneously (A2) is selected as 10T/6T, 12T/6T, 10T/11, 10T/12, 10T/1010, 10T/1012, 10T/106, 10T/126, and/or 10T/612, and/or as a polyamide formed from 2,2,4-trimethylhexanediamine or 2,4,4 trimethylhexanediamine and terephthalic acid, wherein the mole ratio is in the range of 60:40 to 80:20, the ratio 70:30 being particularly preferred: 40 to 95:5 or, in particular, is in the range from 70:30 to 90:10,
wherein preferably the portion (A1) constitutes 50 - 95% by weight, preferably 60 - 90% by weight, particularly preferably 70 - 90% by weight, based on the mixture (A).

15. Use of a polyamide moulding composition according to one of the preceding claims as part of an electrical or electronic component, a housing or housing part, in particular housings or housing parts for portable electronic devices, domestic appliances, domestic machines, devices and apparatus for telecommunications and entertainment electronics, interior and exterior parts in the automotive sector and in the area of other means of transport, interior and exterior parts, preferably with a supporting or mechanical function in the electrical, furniture, sports sector, Mechanical engineering, sanitary and hygiene, medicine, energy and drive technology, in particular preferably cell phones, smartphones, organizers, laptop computers, notebook computers, tablet computers, radios, cameras, clocks, watches, computers, music or video players, navigation devices, GPS devices, electronic picture frames, external hard disks and other electronic storage media, or for the production of yarns, fibers, bicomponent fibers, staple fibers, preferably crimped and/or textured and/or cut to a length of 30 - 140 mm, filaments and monofilaments.

16. Stain-resistant article based on a polyamide moulding compound consisting of:

(A) at least 30% by weight of a polyamide or a polyamide blend consisting of:

(A1) 50 - 100 wt.- % by weight of at least one amorphous and/or microcrystalline polyamide having a glass transition temperature of at least 100°C, measured according to ISO standard 11357 on granules using differential scanning calorimetry at a heating rate of 20°C/min, amorphous polyamides of the polyamide (A1) having melt heat of at most 4 J/g, and microcrystalline polyamides of polyamide (A1) have heat of fusion in the range of 4 - 25 J/g, each determined according to ISO 11357 on granules, Differential Scanning Calorimetry (DSC) with a heating rate of 20 °C/min, based on:

(a1) 20 - 100 mol% of at least one cycloaliphatic diamine; and 0 - 80 mol-% of at least one other aliphatic and/or aromatic diamine; the mole % within component (a1) adding up to 100 mole %, and
(a2) aromatic and/or aliphatic dicarboxylic acids having at least 6 carbon atoms,
with the proviso that up to 45 mol% of the total monomers of components (a1) and (a2) may be replaced by lactams having 6 to 12 carbon atoms or aminocarboxylic acids having 6 to 12 carbon atoms;

(A2) 0-50% by weight of at least one partially aromatic polyamide different from (A1);

wherein (A1) and (A2) complement each other to 100% component (A);

(F) 0.01 - 10% by weight of an inorganic white pigment selected as zinc sulfide;
(B) 0 - 70% by weight of fibrous (B1) and/or particulate (B2) aggregates, excluding inorganic white pigments;
(D) 0 - 25 % by weight of a flame retardant;
(E) 0 - 3 weight % additives;
wherein the sum of the components (A) - (F) is 100% by weight
wherein the stain-resistant article has a staining tendency (AN), as determined in the description using method A, is 1 or 2.

**Revendications**

1. Utilisation d'une masse à mouler en polyamide constituée de :

   (A) au moins 30 % en poids d'un polyamide ou d'un mélange de polyamides composé de

   (A1) 50 - 100 wt.- % en poids d'au moins un polyamide amorphe et/ou microcristallin ayant une température de transition vitreuse d'au moins 100°C, mesurée selon la norme ISO 11357 sur les granulés par calorimétrie différentielle à balayage à une vitesse de chauffage de 20°C/min, les polyamides amorphes du polyamide (A1) ayant une chaleur de fusion d'au plus 4 J/g, et les polyamides microcristallins du polyamide (A1) ont une chaleur de fusion comprise entre 4 et 25 J/g, chacune étant déterminée selon la norme ISO 11357 sur les granulés, la calorimétrie différentielle à balayage (DSC) avec une vitesse de chauffage de 20 °C/min, sur la base

   (a1) 20 à 100 % en moles d'au moins une diamine cycloaliphatique ; et
   0 - 80 % en moles d'au moins une autre diamine aliphatique et/ou aromatique ;
   le pourcentage molaire du composant (a1) totalisant 100 % molaire, et
   (a2) les acides dicarboxyliques aromatiques et/ou aliphatiques ayant au moins 6 atomes de carbone, à condition que jusqu'à 45 % en moles des monomères totaux des composants (a1) et (a2) puissent être remplacés par des lactames ayant 6 à 12 atomes de carbone ou des acides aminocarboxyliques ayant 6 à 12 atomes de carbone ;

   (A2) 0 - 50% en poids d'au moins un polyamide partiellement aromatique autre que (A1) ;
   où (A1) et (A2) s'additionnent pour donner 100 % de la composante (A) ;

   (F) 0,01 à 10 % en poids d'un pigment blancs inorganique choisi dans le groupe constitué par le sulfure de zinc;
   (B) 0 - 70% en poids d'agrégats fibreux (B1) et/ou particulaires (B2), à l'exclusion des pigments blancs inorganiques ;
   (D) 0 - 25 % en poids d'un retardateur de flamme
   (E) 0 - 3 % en poids d'additifs ;
   où la somme des composants (A) - (F) est de 100 % en poids,
   pour la fabrication d'un article résistant aux taches dont la tendance aux taches (AN), déterminée dans la description selon la méthode A, est de 1 ou 2.

2. Utilisation d'une masse à mouler en polyamide selon la revendication 1, **caractérisée**

   **en ce que** la proportion du pigment blanc inorganique du composant (F) s'élève à 0,5 - 10% en poids, de préférence 2 - 7% en poids,
   dans laquelle les pigments blancs inorganiques ont de préférence une taille moyenne de particules (D50) comprise entre 0,1-40 $\mu$m, de préférence entre 0,1-20 $\mu$m, en particulier entre 0,1-10 $\mu$m.

3. Utilisation d'une masse à mouler en polyamide selon la revendication 1, **caractérisée**

   **en ce que** le polyamide du composant (A1) présente une température de transition vitreuse d'au moins 130°C, de préférence d'au moins 140°C, en particulier de préférence d'au moins 150°C, le polyamide du composant (A1) présentant en outre de préférence une température de transition vitreuse au plus égale à 220°C, en particulier au plus égale à 200°C,

soit en ce que les polyamides amorphes de polyamide (A1) ont une chaleur de fusion d'au plus 2 J/g, déterminée selon la norme ISO 11357 sur des granulés, en utilisant la calorimétrie différentielle à balayage (DSC) avec une vitesse de chauffage de 20 °C/min,

ou en ce que les polyamides microcristallins du composant (A1) ont une chaleur de fusion comprise entre 8 et 22 J/g, déterminée selon la norme ISO 11357 sur les granulés, par calorimétrie différentielle à balayage (DSC) avec une vitesse de chauffage de 20 °C/min.

**4.** Utilisation d'une masse à mouler en polyamide selon l'une des revendications précédentes, **caractérisée en ce**

**que** la valeur E (emplacement de la couleur) déterminée dans l'espace colorimétrique du CIELAB selon la norme EN ISO 11664-4 est modifiée par un test de coloration par une valeur ΔE de 6 au maximum, de préférence de 5 au maximum, en particulier de 4 au maximum

ou en ce que les articles ont une luminance L* de préférence > 80, de préférence > 90, en particulier de préférence > 95, tant avant qu'après la teinture, la quantité de a* ou, indépendamment de celle-ci, la quantité de b* étant, alternativement ou en plus, dans chaque cas < 10, de préférence < 5, en particulier de préférence < 3, particulièrement de préférence dans la gamme de 0.

**5.** Utilisation d'une masse à mouler en polyamide selon l'une des revendications précédentes, **caractérisée**

**en ce que** dans le composant (A1), la proportion de (a1) est composée de 40-100 % en moles d'au moins une diamine cycloaliphatique ; et de 0-60 % en moles d'au moins une autre diamine aliphatique et/ou aromatique, de préférence de 50-100 % en moles ou de 60-100 % en moles d'au moins une diamine cycloaliphatique ; et de 0-50 % en moles et de 0-40 % en moles respectivement d'au moins une autre diamine aliphatique et/ou aromatique, en particulier de préférence (a1) étant composée uniquement de diamines cycloaliphatiques,

ou que, dans la partie (a1), l'autre diamine aliphatique et/ou aromatique est une diamine choisie dans le groupe constitué par 1,4-butanediamine, 1,5-pentanediamine, 2-méthyl-1,5-pentanediamine, 2-butyl-2-éthyl-1,5-pentanediamine, 1,6-hexanediamine, 2,2,4-triméthylhexaméthylène diamine, 2,4,4-triméthylhexaméthylène diamine, 1,8-octanediamine, 2-méthyl-1,8-octanediamine, 1,9-nonanediamine, 1,10-décanediamine, 1, 11-undécanediamine, 1,12-dodécanediamine, 1,13-tridécanediamine, 1,14-tétradécanediamine, m-xylylènediamine et p-xylylènediamine ou leurs mélanges, les diamines aliphatiques à chaîne droite ayant 6-10 atomes de carbone étant préférées, en particulier la 1,6-hexanediamine.

**6.** Utilisation d'une masse de moulage en polyamide selon l'une des revendications précédentes, **caractérisée en ce que** la au moins une diamine cycloaliphatique (a1) du composant (A1) comporte 6 à 24 atomes de carbone, et est en particulier choisie dans le groupe suivant : bis-(aminocyclohexyl)méthane, bis-(aminocyclohexyl)propane, norbornanediamine, bis-(aminométhyl)-norbornane, diaminocyclohexane, isophoronediamine, diaminodicyclohexylpropane, chacun sous forme alkyl-substituée ou non substituée, et leurs mélanges, dans lesquels les groupes alkyle linéaires et/ou ramifiés en C1-C6, de préférence en C1-C4, sont préférés comme substituants alkyle, en particulier les groupes méthyle, éthyle, propyle, isopropyle ou butyle, notamment les groupes méthyle.

**7.** Utilisation d'une masse de moulage en polyamide selon l'une des revendications précédentes, **caractérisée en ce que** la au moins une diamine cycloaliphatique dans (a1) du composant (A1) est choisie dans le groupe suivant : bis-(4-amino-3-méthyl-cyclohexyl)-méthane (MACM), bis-(4-amino-cyclohexyl)-méthane (PACM), bis-(4-amino-3-éthyl-cyclohexyl)-méthane (EACM), bis-(4-amino-3,5-diméthyl-cyclohexyl)-méthane (TMDC), 2, 2-(4,4'-diaminodicyclohexyl)propane (PACP) ou leurs mélanges, en particulier de préférence le bis-(4-amino-3-méthyl-cyclohexyl)-méthane (MACM), le bis-(4-amino-3,5-diméthyl-cyclohexyl)-méthane (TMDC), bis-(4-amino-cyclohexyl)-méthane (PACM) ou des mélanges de ceux-ci, dans lequel en outre, de préférence dans le composant (A1), pas plus de 10 % en moles, de préférence pas plus de 5 % en moles, de ces diamines sont remplacées par d'autres diamines aliphatiques et/ou aromatiques, et dans lequel en particulier, de préférence, le composant (A1) est exempt de ces autres diamines non cycloaliphatiques.

**8.** Utilisation d'une masse à mouler en polyamide selon l'une des revendications précédentes, **caractérisée en ce que** le au moins un acide dicarboxylique aromatique et/ou aliphatique ayant au moins 6 atomes de carbone (a2) du composant (A1) est choisi dans le groupe suivant : les acides dicarboxyliques aliphatiques non ramifiés à chaîne droite, les acides dicarboxyliques aromatiques tels que notamment l'acide isophtalique, l'acide téréphtalique, l'acide naphtalène dicarboxylique, et leurs mélanges, de préférence l'acide dicarboxylique aromatique et/ou aliphatique ayant au moins 6 atomes de carbone (a2) du composant (A1) étant choisi dans le groupe suivant : acide isophtalique seul, mélange d'acide isophtalique et d'acide téréphtalique, de préférence dans un rapport molaire de 40/60 à 60/40, ou acide dicarboxylique aliphatique non ramifié en C10-C14, de préférence acide 1,10-décanedicarboxylique, acide 1,12-dodécanedicarboxylique.

9.  Utilisation d'une masse à mouler en polyamide selon l'une des revendications précédentes, **caractérisée en ce que**

dans ce composant (A1) est exempt d'acide téréphtalique et/ou d'acide isophtalique, et en outre, de préférence, la proportion de lactame et/ou d'acide aminocarboxylique est sensiblement nulle,
ou que, si le composant (A1) contient de l'acide téréphtalique et/ou de l'acide isophtalique dans le cadre de (a2), ou si (a2) est formé d'acide téréphtalique et/ou d'acide isophtalique, 10 à 40 % en moles, de préférence 20 à 35 % en moles, de la somme des monomères des composants (a1) et (a2) sont remplacés par des lactames ayant 6 à 12 atomes de carbone, en particulier ayant 10 ou 12 atomes de carbone, ou des acides aminocarboxyliques ayant 6 à 12 atomes de carbone, en particulier $\alpha,\omega$ acides aminés et en particulier ceux ayant 10 ou 12 atomes de carbone.

10.  Utilisation d'une masse à mouler en polyamide selon l'une des revendications précédentes, **caractérisée en ce que** la proportion d'acide téréphtalique dans le composant (A1) est au maximum de 50 % en moles, par rapport à la somme de tous les acides dicarboxyliques du composant (A1), la préférence étant donnée si la proportion d'acide téréphtalique dans le composant (A1) est inférieure à 45 % en moles ou si aucun acide téréphtalique n'est présent dans le composant (A1).

11.  Utilisation d'une composition de moulage en polyamide selon l'une des revendications précédentes, **caractérisée en ce que** le composant (A1) est formé par un système du groupe choisi parmi : MACM9, MACM10, MACM11, MACM12, MACM13, MACM14, MACM16, MACM18, PACM9, PACM10, PACM11, PACM12, PACM13, PACM14, PACM16, PACM18, TMDC9, TMDC10, TMDC11, TMDC12, TMDC13, TMDC14, TMDC15, TMDC16, TMDC17, TMDC18 ou des mélanges ou copolyamides basés sur ces systèmes, ou que le composant (A1) est formé par un système du groupe choisi parmi : MACMI/12, MACMT/12, MACMI/MACMT/12, 6I/6T/MACMI/MACMT/12, 6I/MACMI/MACMT, 6I/PACMI/PACMT, 6I/6T/MACMI, MACMI/MACMT36, 12/PACMI ou PACMT/6, IPDT/6 ou leurs mélanges, MACM9-18/PACM9-18, en particulier MACM10/PACM10, MACM12/PACM12 et MACM14/PACM14 et leurs mélanges

12.  Utilisation d'une masse à mouler en polyamide selon l'une des revendications précédentes, **caractérisée en ce que**

cette composante (A2) est composée de
les acides dicarboxyliques, à savoir les acides dicarboxyliques aromatiques, de préférence choisis dans le groupe : acide téréphtalique, acide naphtalènedicarboxylique et acide isophtalique et leurs mélanges, et/ou parmi les acides dicarboxyliques choisis dans le groupe acide adipique, acide de liège, acide azélaïque, acide sébacique, acide undécanedioïque, acide dodécanedioïque, acide tridécanedioïque, acide tétradécanedioïque, acide pentadécanedioïque, acide hexadécanedioïque, acide heptadécanedioïque, l'acide octadécanedioïque, l'acide gras C36-dimère, l'acide cis- et/ou trans-cyclohexane-1,4-dicarboxylique et/ou l'acide cis- et/ou trans-cyolohexane-1,3-dicarboxylique (CHDA) et leurs mélanges, où l'acide adipique, l'acide isophtalique, l'acide sébacique et l'acide dodécanedioïque sont préférés, et où la proportion d'acide téréphtalique dans la quantité totale d'acides dicarboxyliques du composant (A2) est de préférence comprise entre 50 et 100 % en moles, de préférence entre 60 et 95 % en moles et particulièrement de préférence entre 65 et 90 % en moles, et entre diamines, à savoir sélectionnés dans le groupe suivant : 1,4-butanediamine, 1,5-pentanediamine, 2-méthyl-1,5-pentanediamine, 2-butyl-2-éthyl-1,5-pentanediamine, 1,6-hexanediamine, 2,2,4-triméthylhexaméthylène diamine, 2,4,4-triméthylhexaméthylène diamine, 1,8-octanediamine, 2-méthyl-1,8-octanediamine, 1, 9-nonanediamine, 1,10-décanediamine, 1,11-undécanediamine, 1,12-dodécanediamine, 1,13-tridécanediamine, 1,14-tétradécanediamine, m-xylylènediamine et p-xylylènediamine, où 1,6-hexanediamine, 1,10-décanediamine et 1,12-dodécanediamine sont préférées,
où les polyamides (A2) peuvent également contenir des lactames ou des acides aminocarboxyliques, en particulier $\alpha,\omega$ des acides aminés ou des lactames ayant 6 à 12 atomes de carbone, de préférence choisis dans le groupe suivant : acide m-aminobenzoïque, acide p-aminobenzoïque, caprolactame (CL), $\alpha,\omega$-aminocaproïque, $\alpha,\omega$-aminoheptanoïque, $\alpha,\omega$-aminooctanoïque, $\alpha,\omega$-aminononanoïque, $\alpha,\omega$-aminodécanoïque, $\alpha,\omega$-aminoundécanoïque (AUA), laurinlactam (LL) et $\alpha,\omega$-aminododecanoic acid (ADA), avec une préférence particulière pour le caprolactame, $\alpha,\omega$-aminocaproic acid, laurinlactam, $\alpha,\omega$-aminoundecanoic acid et $\alpha,\omega$-aminododecanoic acid.

13.  Utilisation d'une masse à mouler en polyamide selon l'une des revendications précédentes, **caractérisée en ce que**

le composant (A) est constitué d'un ou plusieurs polyamides (A1),

ou que le composant (A) consiste en un mélange d'un ou plusieurs polyamides (A1) avec des polyamides partiellement aromatiques (A2), le composant (A2) dans ce mélange représentant au maximum 50 % en poids, de préférence au maximum 40 % en poids et de manière particulièrement préférée au maximum 35 % en poids, par rapport au mélange de polyamides A.

**14.** Utilisation d'une masse à mouler en polyamide selon l'une des revendications précédentes, **caractérisée en ce que** le composant (A1) est formé par un système choisi dans le groupe :

MACM12, MACMI/12, TMDC12, MACMT/MACMI/12 ou un mélange de ceux-ci

et plus préférablement simultanément (A2) est choisi comme 6T/6I, le rapport molaire étant dans la gamme de 60:40 à 80:20 ou plus particulièrement dans la gamme de 65:35 à 75:25, le rapport 70:30 étant particulièrement préféré.

ou, plus préférablement, simultanément (A2) est choisi comme 10T/6T, 12T/6T, 10T/11, 10T/12, 10T/1010, 10T/1012, 10T/106, 10T/126, et/ou 10T/612 et/ou comme polyamide formé à partir de 2,2,4-triméthylhexanediamine ou de 2,4,4-triméthylhexanediamine et d'acide téréphtalique, le rapport molaire étant dans la gamme de 60:40 à 80:20, le rapport 70:30 étant particulièrement préféré : 40 à 95:5 ou, en particulier, se situe dans la fourchette de 70:30 à 90:10,

dans laquelle la proportion (A1) s'élève de préférence à 50 - 95% en poids, de préférence à 60 - 90% en poids, particulièrement de préférence à 70 - 90% en poids, par rapport au mélange (A)

**15.** Utilisation d'une masse de moulage en polyamide selon l'une des revendications précédentes en tant que partie d'un composant électrique ou électronique, d'un boîtier ou d'un composant de boîtier, en particulier de boîtiers ou de parties de boîtier pour des appareils électroniques portables, des appareils ménagers, des machines domestiques, des dispositifs et appareils de télécommunication et d'électronique de divertissement, des pièces intérieures et extérieures dans le secteur automobile et dans le domaine d'autres moyens de transport, des pièces intérieures et extérieures, de préférence avec une fonction de support ou mécanique dans le secteur électrique, du mobilier, du sport, Construction mécanique, hygiène et sanitaire, médecine, énergie et technologie des lecteurs, en particulier, de préférence, les téléphones mobiles, les téléphones intelligents, les organisateurs, les ordinateurs portables, les blocs-notes, les tablettes informatiques, les radios, les appareils photographiques, les horloges, les montres, les ordinateurs, les lecteurs de musique ou de vidéo, les appareils de navigation, les dispositifs GPS, les cadres d'images électroniques, les disques durs externes et autres supports de stockage électroniques, ou pour la production de fils, de fibres, de fibres bicomposées, de fibres discontinues, de préférence frisées et/ou texturées et/ou coupées à une longueur de 30 à 140 mm, de filaments et de monofilaments

**16.** Article résistant aux colorants à base d'une composition de moulage en polyamide consistant en :

(A) au moins 30 % en poids d'un polyamide ou d'un mélange de polyamides composé de

(A1) 50 - 100 wt.- % en poids d'au moins un polyamide amorphe et/ou microcristallin ayant une température de transition vitreuse d'au moins 100°C, mesurée selon la norme ISO 11357 sur des granulés par calorimétrie différentielle à balayage à une vitesse de chauffage de 20°C/min, les polyamides amorphes du polyamide (A1) ayant une chaleur de fusion d'au plus 4 J/g, et les polyamides microcristallins du polyamide (A1) ont une chaleur de fusion comprise entre 4 et 25 J/g, chacune étant déterminée selon la norme ISO 11357 sur les granulés, la calorimétrie différentielle à balayage (DSC) avec une vitesse de chauffage de 20 °C/min, sur la base

(a1) 20 à 100 % en moles d'au moins une diamine cycloaliphatique ; et
0 - 80 % en moles d'au moins une autre diamine aliphatique et/ou aromatique ;
le pourcentage molaire du composant (a1) totalisant 100 % molaire, et
(a2) les acides dicarboxyliques aromatiques et/ou aliphatiques ayant au moins 6 atomes de carbone, à condition que jusqu'à 45 % en moles des monomères totaux des composants (a1) et (a2) puissent être remplacés par des lactames ayant 6 à 12 atomes de carbone ou des acides aminocarboxyliques ayant 6 à 12 atomes de carbone ;

(A2) 0 - 50% en poids d'au moins un polyamide partiellement aromatique autre que (A1) ;
où (A1) et (A2) s'additionnent pour donner 100 % de la composante (A) ;

(F) 0,01 à 10 % en poids d'un pigment blanc inorganique choisi dans le groupe constitué par le sulfure de zinc;
(B) 0 - 70% en poids d'agrégats fibreux (B1) et/ou particulaires (B2), à l'exclusion des pigments blancs inorganiques ;
(D) 0 - 25 % en poids d'un retardateur de flamme;
(E) 0 - 3 % en poids d'additifs ;
où la somme des composants (A) - (F) est de 100 % en poids
la tendance aux taches (AN) de l'article résistant aux colorants, déterminée dans la description selon la méthode A, ayant de 1 ou 2.

**EP 2 746 344 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004046279 A
- WO 2012049252 A2
- WO 2012049255 A1
- EP 0725101 A
- EP 0837087 A
- EP 1570983 A
- WO 2009132989 A
- EP 2608276 A
- EP 1882719 A
- DE 103463261